(19) Europäisches Patentamt
European Patent Office
Office européen des brevets

(11) Publication number: **0 349 270 B1**

(12) # EUROPEAN PATENT SPECIFICATION

(45) Date of publication of patent specification: **24.08.94**

(51) Int. Cl.⁵: **C08F 293/00**, C09J 153/00

(21) Application number: **89306516.9**

(22) Date of filing: **27.06.89**

(54) **Pressure-sensitive adhesives.**

(30) Priority: **28.06.88 US 212594**

(43) Date of publication of application:
**03.01.90 Bulletin 90/01**

(45) Publication of the grant of the patent:
**24.08.94 Bulletin 94/34**

(84) Designated Contracting States:
**BE CH DE ES FR GB IT LI NL SE**

(56) References cited:
**EP-A- 0 286 376**

**CHEMICAL ABSTRACTS, vol. 111, 1989, page 68, abstract no. 98649b, Columbus, Ohio, US; & JP-A-01 24 879**

(73) Proprietor: **MINNESOTA MINING AND MANUFACTURING COMPANY**
**3M Center,**
**P.O. Box 33427**
**St. Paul, Minnesota 55133-3427 (US)**

(72) Inventor: **Ali, Mahfuza B. c/o Minnesota Mining and**
**Manufacturing Company**
**2501 Hudson Road**
**St. Paul Minnesota 55144-1000 (US)**
Inventor: **Andrus, Milton H. c/o Minnesota Mining and**
**Manufacturing Company**
**2501 Hudson Road**
**St. Paul Minnesota 55144-1000 (US)**

(74) Representative: **Baillie, Iain Cameron et al**
**c/o Ladas & Parry**
**Altheimer Eck 2**
**D-80331 München (DE)**



Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services
(3.10/3.09/3.3.3)

## Description

### Technical Field

This invention relates to pressure-sensitive adhesive compositions comprised of acrylic block copolymer and pressure-sensitive adhesive coated sheet materials made with such adhesive compositions.

### Background Art

Normally tacky pressure-sensitive adhesive (hereinafter identified by the abbreviation "PSA") compositions suitable, for example, for use in adhesive tapes must have a requisite fourfold balance of adhesion, cohesion, stretchiness, and elasticity. PSA coated tapes have been produced for at least a half century.

Early PSA compositions consisted of natural crude rubber tackified by admixture with esterified wood rosin. This was later improved by the introduction of synthetic acrylic ester elastomers which were inherently tacky and possessed the elasticity and compliance required for the fourfold balance of properties of a true PSA. As the need arose, improvements were made in basic acrylic ester PSA compositions to meet the needs of the marketplace. Transparency and resistance to oxidation inherent in acrylic ester PSA's made them outstanding candidates for the most demanding PSA tape applications.

The PSA compositions which have an extremely delicate balance of properties, known in the trade as the "fourfold" balance of adhesion, cohesion, stretchiness and elasticity are disclosed in Ulrich (U.S. Reissue No. 24,906). This patent, assigned to the assignee of the present application, is somewhat of a landmark in the PSA art because it was virtually the first to recognize that acrylic polymer could be produced to provide a visco-elastic mass which provides the requisite fourfold balance of properties needed for a successful PSA composition.

Subsequent references suggest various modifications in the basic acrylic polymer to enhance various physical properties in the PSA composition. For example, Martens et al (U.S. Pat. No. 4,181,752), also assigned to the assignee of the present case, disclosed exposing acrylic polymer to ultraviolet radiation to achieve crosslinking and enhance shear strength. Husman et al (U.S. Pat. No. 4,554,325), also assigned to the assignee of the present application, disclosed acrylic copolymer grafts with macromolecular monomer having pendent polymeric thermoplastic groups of high glass transition temperature to achieve improved shear strength. Harlan (U.S. Pat. No. 3,239,478) disclosed the preparation of block or segmented copolymers to provide PSA compositions which had improved strength and overall pressure-sensitive adhesive properties because of phase separation of soft butadiene or butadiene-isoprene polymer blocks and hard polystyrene blocks of the block copolymer.

European Patent Publication No. 286,376 published on 12th October 1988 is available as a piece of relevant prior art in respect of some only and not all of the designated states of the subject European patent and furthermore is only available for the purposes of Articles 54(3) and 54(4) EPC in respect of all relevant states. This reference discloses ABA type block copolymers similar to those disclosed in the subject patent except that it is expressly provided in the reference that certain specific polar monomeric components that can optionally be present in the blocks can only be present in amounts of less than 5 parts by weight with respect to 100 parts by weight of the acrylic ester forming the relevant intermediate blocks.

It is generally recognized that control of the polymerization to produce a block copolymer from which the PSA composition is prepared has long been a goal for the production of a successful PSA composition. Control has not always been an easy task according to prior art methods.

### Disclosure of the Invention

The present invention provides pressure-sensitive adhesive compositions which contain reinforced acrylic block copolymers and a method of making the same by utilization of an iniferter as a means of promoting, controlling and terminating polymerization of the copolymer.

The term "iniferter" refers to a chemical compound that has a combined function of being a free radical initiator, transfer agent, and terminator, the term "iniferter" being a word formed by the underlined portions of the terms identifying these functions. This term and its use in a production of block copolymers is well known, particularly because of the work of Takayuki Otsu of the Department of Applied Chemistry, Osaka City University, Osaka, Japan. This work is discussed, for example, in an article by Otsu et al., entitled "Living Radical Polymerizations in Homogeneous Solution by Using Organic Sulfides as Photoiniferters", Polymer Bulletin, 7, 45-50 (1982) and an article by Otsu et al., entitled "Living Mono- and Biradical Polymerizations in Homogeneous System Synthesis of AB and ABA Type Block Copolymers", Polymer

Bulletin, 11, 135-142 (1984). Despite the rather detailed description of making block copolymers according to such disclosures, there is no disclosure of making acrylic block copolymer which have the requisite physical properties to make it suitable for use in a PSA composition.

The present invention provides pressure-sensitive adhesive compositions comprising the reinforced acrylic block copolymer. The control of the polymerization provided by the iniferter technology permits "tailoring" of the reinforced acrylic block copolymer so that PSA compositions having a wide spectrum of physical properties can be prepared. The PSA compositions of the invention are all characterized by having the requisite fourfold balance of adhesion, cohesion, stretchiness, and elasticity to make a successful PSA. The adhesive composition also has good peel strength and tack properties plus good shear strength and creep resistance as well as excellent processability with or without solvent. For the most part, the adhesive compositions of the present invention have optical clarity and are resistant to oxidative and photochemical degradation.

When coated upon an appropriate backing, the pressure-sensitive adhesive compositions provide useful PSA coated sheet materials, e.g., tapes, labels, and the like. When the backing is a clear backing, e.g., a clear polymeric film backing, the coated sheet materials are transparent, once applied to a substrate such as a printed page.

Specifically, the reinforced block copolymer is made by a method which has the following steps:

(a) mixing (1) an iniferter represented by the general formula $I(T)_n$ capable upon being subjected to an appropriate energy source of forming free radicals $I(\bullet)_n$ and $nT\bullet$ wherein n is an integer of at least 2, $I\bullet$ is a highly reactive free radical capable of initiating free radical polymerization, and $T\bullet$ is a less reactive free radical which is generally much less capable of initiating free radical polymerization than $I\bullet$ but will rejoin with $I(\bullet)_n$ or a free radical polymer segment free radically polymerized with $I(\bullet)_n$ upon termination of said energy source and (2) a first monomer charge comprising acrylic monomer which is free radically polymerizable in the presence of $I(\bullet)_n$ to form an acrylic polymer block having a glass transition temperature of less than 0° C;

(b) exposing the mixture of (a) to an energy source capable of forming free radicals $I(\bullet)_n$ and $nT\bullet$;

(c) maintaining the exposure of (b) until said first monomer charge polymerizes with $I(\bullet)_n$ to form a free radical polymer segment represented by the formula $I(B\bullet)_n$ wherein B represents an elastic acrylic polymer block having a glass transition temperature of less than 0°C formed of said first monomer charge;

(d) terminating said exposure whereby to cause $I(B\bullet)_n$ and $nT\bullet$ to combine to form a polymer represented by the formula $I(BT)_n$;

(e) mixing $I(BT)_n$ with a second monomer charge comprising monomer which is free radically polymerizable in the presence of $I(B\bullet)_n$ to a thermoplastic reinforcing polymer block having a glass transition temperature of at least 30°C;

(f) exposing $I(BT)_n$ to an energy source capable of forming free radicals $I(B\bullet)_n$ and $nT\bullet$;

(g) maintaining the exposure of (f) until said second monomer charge polymerizes with $I(B\bullet)_n$ to form a free radical block copolymer segment represented by the formula $I(BA\bullet)_n$ wherein A represents a normally thermoplastic polymer block having a glass transition temperature of at least 30°C formed of said second monomer charge; and

(h) terminating the exposure of (f) whereby $I(BA\bullet)_n$ and $nT\bullet$ combine to form a block copolymer represented by the formula $I(BAT)_n$.

The reinforced block copolymer for use in the invention is an ABA type copolymer which can be represented by the general formula $I(BAT)_n$

wherein

I represents a radical derived from the free radical initiator $I\bullet$ of an iniferter of the formula $I(T)_n$ as previously defined;

T represents a radical derived from the reaction terminator free radical $T\bullet$ of iniferter $I(T)_n$

n is an integer of at least 2;

B is an elastic acrylate polymer block having a glass transition of less than 0°C; and

A is a normally thermoplastic polymer block having a glass transition of at least 30°C.

The preferred block copolymers for use in PSA compositions are those wherein n is an integer of 2 to 12, most preferably 2 to 6. The preferred weight ratio of B block to A block in the copolymer for pressure-sensitive adhesive compositions is from about 90:10 to 70:30.

Preferred block copolymers for PSA compositions have an elastomeric block which is formed of monomer preferably comprising from 75 to 100 percent by weight of at least one monomeric acrylic or methacrylic acid ester of a non-tertiary alcohol, the alcohol having from 1 to 14 carbon atoms with the average number of carbon atoms being 4 to 12, and from 0 to 25 percent by weight of at least one polar

monomer copolymerizable with the monomeric acrylic or methacrylic acid ester. Most preferably, the polar monomer is from 1 to 20 parts by weight of the total weight of the acrylic block. Preferred monomeric acrylic or methacrylic acid ester is selected from the group consisting of isooctyl acrylate, 2-ethylhexyl acrylate, 2-methylbutyl acrylate and butyl acrylate.

The preferred polar monomers are selected from the group consisting of acrylic acid, methacrylic acid, itaconic acid, acrylamide, methacrylamide, acrylonitrile, methacrylonitrile, N-vinylpyrrolidone, and polyethylene oxide acrylate.

The monomeric material from which the A block is formed is selected from the group consisting of methyl methacrylate, polystyrylethyl methacrylate macromer, methyl methacrylate macromer, acrylic acid, acrylonitrile, isobornyl methacrylate, N-vinyl pyrrolidone, and mixtures thereof.

The pressure-sensitive adhesive (PSA) of the present invention is comprised of a block copolymer which is characterized as a two-phase system wherein more rigid, thermoplastic A-polymer blocks provide discrete reinforcing micro-domains within an overwhelming continuous matrix formed by rubbery, viscoelastic B-polymer blocks. While such copolymers are known in PSA compositions, many of such copolymers are deficient or are only produced by complex chemical reactions. The present invention utilizes photoiniferter polymerization techniques to conveniently produce the two phase block copolymers with exceptional reaction control. This technique permits the selection and easy reaction of monomers to produce a B-polymer block having the required glass transition temperature (Tg) and the subsequent easy selection and reaction of the monomers forming A-polymer blocks having the required glass transition temperature with precise control to produce the appropriate balance between the A-polymer block and the B-polymer block to provide a PSA composition.

Care must be taken to produce a copolymer with A-polymer blocks which have solubility parameters that are sufficiently different from that of the B-polymer blocks so as to cause the appropriate phase separation between the A and B-polymer blocks. The term "phase separation", as used herein, refers to the presence of distinct reinforcing A-polymer block domains in a matrix comprised of the softer, rubbery B-polymer block domains.

The phase separation achieved by the judicious selection and polymerization of monomer to obtain polymer blocks having the appropriate glass transition temperatures and solubility parameters for each block, distinguishes the block copolymer of the PSA compositions of the present invention from the randomly polymerized homogeneous acrylic copolymers of identical monomer compositions.

It is difficult to obtain clean, discrete block configuration in acrylic copolymers. Premature termination of the polymerization can prevent the obtainment of a polymer having the desired molecular weight. Side reactions due to improper initiator selection are even more damaging and can contribute to poorly defined acrylic blocks in the PSA.

Through the optimization of phase separation, a precisely "balanced" PSA, with exceptional cohesive integrity, has been obtained. This has been done without relying upon chemical crosslinking or other disruptive outside forces which typically diminish the overall balance of properties requisite to commercially-recognized pressure-sensitive adhesives.

The preferred block copolymers according to the present invention include those which may be represented by the general formula

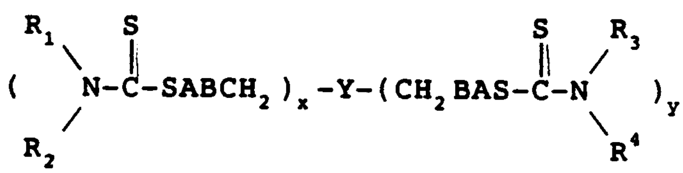

wherein

$R_1$, $R_2$, $R_3$ and $R_4$ are aliphatic, aromatic, or substituted aromatic moieties (preferably $C_{1-4}$ aliphatic moieties), which can be the same or different and which do not substantially interfere with the ability of I• to promote free radical polymerization or with T• to recombine with I• or a polymer free radical segment including I•;

Y is a linking group having a functionality of x + y which does not substantially interfere with the ability of I• to promote free radical polymerization or the ability of T• to recombine with I• or a polymer free radical segment including I•; and

x and y are each integers of at least 1 and the sum of x + y is not more than 12.

The most preferred block copolymers according to the invention are those represented by the formula

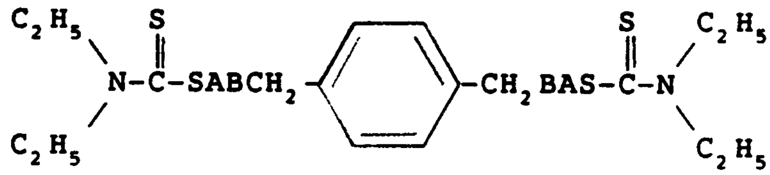

The most preferred iniferters for producing the ABA block copolymers according to the present invention are selected from the group consisting of xylylene bis (N,N-diethyl dithiocarbamate) and xylylene bis (N-carbazolyl dithiocarbamate).

The PSA compositions according to the invention comprise reinforced acrylic ABA block copolymer of the formula $I(BAT)_n$, as previously defined, and adhesive tackifier. The amount of tackifier in the pressure-sensitive adhesive compositions of the present invention is selected to endow the ABA block copolymer with sufficient adhesive tack to make it useful as a pressure-sensitive adhesive composition. Since a large portion of the ABA block copolymers as defined above are inherently tacky, they need no tackifier. If tackifier is employed, the amount is selected to provide sufficient adhesive tack to make the composition useful as a PSA. This amount would typically be on the order of 0 to 150 parts by weight per 100 parts ABA block copolymer.

## Best Mode for Carrying Out The Invention

The acrylic monomer of the elastomeric block as previously mentioned, is a monomeric acrylic or methacrylic acid ester of a non-tertiary alcohol, said alcohol having from 1 to 14 carbon atoms with the average number of carbon atoms being 4-12. Examples of such monomers include the esters of acrylic acid or methacrylic acid with non-tertiary alkyl alcohols such as 1-butanol, 1-pentanol, 2-pentanol, 3-pentanol, 2-methyl-1-butanol, 1-methyl-1-butanol, 1-methyl-1-pentanol, 2-methyl-1-pentanol, 3-methyl-1-pentanol, 2-ethyl-1 butanol, 3,5,5-trimethyl-1-hexanol, 2-ethyl hexanol, 3-heptanol, 2-octanol, 1-decanol and 1-dodecanol. Such monomeric acrylic or methacrylic esters are known in the art and many are commercially available.

As mentioned above, the elastomeric block may include up to 40 preferably up to 25 percent by weight of a polar monomer which is copolymerizable with the monomeric acrylic or methacrylic acid ester. Preferred monomers are acrylic acid, methacrylic acid, itaconic acid, acrylamide, N-vinyl pyrrolidone, methacrylamide, acrylonitrile, polyethylene oxide acrylate and methacrylonitrile. The polar monomer is not necessary to produce the claimed PSA compositions but up to 40 preferably up to 25 percent of the total weight of all monomers of elastomeric block may be included. The more preferred PSA composition according to the present invention will contain from 1 to 20 percent by weight of polar monomer of the total weight of the elastomeric block.

The polar monomer may be a macromolecular monomer, sometimes referred to as a "macromer". Such a monomer may also be included in the thermoplastic B polymer block. Such a monomer is a polymeric material having a copolymerizable vinyl group with which the acrylic monomer and other polar monomers (if more than one is used) will copolymerize under the polymerization conditions.

The vinyl-terminated polymer monomer, once polymerized with the acrylic monomer and other polar monomer, if used, forms an elastomeric polymer block having pendant polymeric moieties which also tend to reinforce the otherwise soft acrylic block, providing a substantial increase in the shear strength of the resultant copolymer adhesive composition. The amount of polymeric monomer is selected to optimize the shear strength value depending upon the intended use of the PSA composition. An excessive quantity of polymeric monomer makes the resultant copolymer overly reinforced, decreasing its adhesive tack and making it more like a polymeric film rather than an adhesive composition.

The vinyl-terminated polymeric monomers useful in the present invention are known and may be prepared by the method disclosed by Husman et al, U.S. Pat. No. 4,554,324. According to Husman, such monomers are known and may be prepared by the method disclosed by Milkovich et al as described in U.S. Pat. Nos. 3,786,116 and 3,842,059. As disclosed therein, vinyl-terminated polymeric monomer is prepared by anionic polymerization of a polymerizable monomer to form a living polymer. Such monomers include those having an olefinic group, such as the vinyl-containing compounds. Living polymers are conveniently prepared by contacting the monomer with an alkali metal hydrocarbon or alkoxide salt in the presence of an inert organic diluent which does not participate in or interfere with the polymerization

process. Monomers which are susceptible to anionic polymerization are well known. Illustrative species include vinyl aromatic compounds such as styrene, alpha-methylstyrene, vinyltoluene and its isomers. Other monomers susceptible to anionic polymerization are also useful.

The initiators for anionic polymerization may be any of the alkali metal hydrocarbons or alkoxide salts which produce a mono-functional living polymer, i.e., only one end of the polymer contains a reactive ion. Such initiators include the hydrocarbons of lithium, sodium or potassium, for example, having an alkyl radical containing up to 20 carbon atoms or more, and preferably up to 8 carbon atoms. Illustrative alkali metal hydrocarbons include ethylsodium, propylsodium, butylpotassium, octylpotassium, phenylsodium, ethyllithium, buytllithium, sec-butyllithium, isobutyllithium, tertbutyllithium and 2-ethylhexyllithium. Sec-butyllithium is the preferred initiator.

The inert organic diluent utilized to facilities heat transfer and adequate mixing of the initiator and monomer preferably is a hydrocarbon or an ether. Useful diluents include saturated aliphatic and cycloaliphatic hydrocarbons such as hexane, heptane, octane, cyclohexane and the like. In addition, aliphatic and cyclic ether solvents may be used, for example, dimethyl ether, diethyl ether, and tetrahydrofuran.

The amount of initiator usually dictates the molecular weight of the living polymer. If a small portion of initiator is used, with respect to the amount of monomer, the molecular weight of the living polymer will generally be larger than if a large portion of initiator is used. It is generally advisable to add initiator dropwise to the monomer until the persistence of the characteristic color of the organic anion is observed, then the calculated amount of the initiator is added for the molecular weight desired. The preliminary dropwise addition serves to destroy contaminants and thus permits better control of the polymerization. Generally, the initiator concentration can vary from about 0.01 to about 0.1 mole of active alkali metal per mole of monomer, or higher. Preferably, the concentration of the initiator will be from 0.01 to 0.04 mole of active alkali metal per mole of monomer.

The temperature of the polymerization will depend upon the monomer. Generally, the reaction can be carried out at a temperature ranging from -100 °C. up to 100 °C.

The anionic polymerization must be carried out under controlled conditions so as to exclude substances which destroy the initiator or living anion. Water and oxygen must be excluded. The polymerization therefore is carried out under anhydrous conditions in an inert atmosphere such as nitrogen, helium or argon.

The living polymers may be terminated in several ways. It is important, however, that conditions be selected to provide a quantitative termination free from side reactions. Under certain conditions the living polymeric anion may be allowed to react directly with halogen-containing terminating agents to produce, for example, vinyl-terminated polymeric monomers. In many cases, however, the polymeric anion is highly reactive and non-selective in its reaction with the terminating agent. In addition to displacement of the halogen atom, it may abstract hydrogen atoms or react with other functional groups present, including the vinyl group itself. This results in polymer chains which are non-functional or of unwanted functionality and molecular weight. Occasionally, under these conditions, a vinyl-terminated polymer may be attached by living anion and its functionality destroyed.

One means for overcoming the foregoing problem is to render the living anion less reactive, thus less susceptible to side reactions, by "capping" with a less reactive end group prior to actual termination. Examples of suitable "capping agents" include lower alkylene oxides such as ethylene and propylene oxide, and 1,1-diphenylethylene, etc. A preferred capping agent is an alkylene oxide, such as ethylene oxide. The capping agent reacts with the living polymer, destroying its oxirane ring. The alkoxide anion then displaces the halogen atom of the terminating agent selectively, leaving the vinyl group intact.

The capping reaction is carried out quite simply, as in the case of the terminating reaction, by adding the capping reactant to the living polymer at the polymerization temperature. The reaction occurs immediately. As in the case of the termination reaction, a slight molar excess of the capping reactant with respect to the amount of initiator may be used. The reaction occurs on a mole for mole basis. This reaction is described in Milkovich, U.S. Pat. No. 3,842,059. According to U.S. Pat. No. 3,842,059, reaction with the terminating agent provides the desired vinyl-terminated polymeric monomer.

A second method of termination, also useful for synthesis of the vinyl-terminated polymeric monomers, involves capping the living anion performed as described previously, and then protonating the alkoxide ion to produce a hydroxyl-terminated polymer. The hydroxyl group is then allowed to react with a terminating agent containing an isocyanate group (instead of a halogen atom) to produce the vinyl termination. Suitable terminating agents for this reaction are isocyanato alkyl acrylates and methacrylates having 1 to 4 carbon atoms in the alkyl group. The hydroxyl and isocyanato groups react to form a urethane linkage between the polymeric segment and the "monomeric" end group. Intermediate protonation of the alkoxide is necessary

to prevent unwanted side reactions upon termination.

Although U.S. Pat. No. 3,786,116 teaches that the molecular weight distribution of the polymer chains of the vinyl-terminated polymericmonomer prior to copolymerization must be narrow, i.e., less than 1.1 polydispersity, it has been found that useul psa compositions according to the present invention may employ polymeric monomer having a polydispersity of up to about 3 without deleterious effects on the adhesive properties. These broader molecular weight distributions may be obtained by known variations in temperature of polymerization and the lithium alkali initiator used.

The vinyl-terminated polymeric monomers useful in the present invention may also be prepared by free-radical polymerization (rather than anionic polymerization). Known methods can be used to prepare semi-telechelic polymers using thermal free-radical initiators. An illustrative method is described in Y. Yamashita, K. Ito, H. Mizuno and H. Okada, Polymer Journal 14, 255-260 (1982) and K. Ito, N. Usami, and Y. Yamashita, Macro-molecules 13,216-221 (1980). These functional polymers can then be converted into vinyl-terminated monomers using standard condensation chemistry, ring opening reactions, etc. Specifically, carboxylic-acid terminated low molecular weight polystyrene can be prepared using 4,4'-azobis-(4-cyanovaleric acid) as an initiator and an acid-containing chain transfer agent such as $HS-CH_2-COOH$. The semi-telecelic polystyrene can then be vinyl-terminated via, for example, ring opening of glycidyl methacrylate. These vinyl-terminated polymers have a high polydispersity. The most preferred macromolecular monomers include polystyrylethyl methacrylate macromer and polymethyl methacrylate macromer.

It should be understood that minor amounts of the monomer forming the B block, the monomer forming the A block, or both may be present as a homopolymer in the copolymer adhesive composition of the invention. Such minor amounts of homopolymer may be produced in an unwanted side reaction during polymerization of the copolymer. Such amounts will typically be less than 10 parts of all homopolymer based upon 100 parts of copolymer.

Certain PSA compositions according to the invention possess excellent moisture vapor transmission (MVT) properties, making them particularly useful as the PSA of adhesive tapes for use on skin. Such PSA tape constructions preferably have a moisture vapor transmittance (MVT) of at least 750 grams per square meter measured over a 24 hour period when measured according to ASTM E-9680 (based on a modified Payne Cup Method) when coated on a highly porous backing which has an MVT of at least 10,000 grams per meter per 24 hours. Such PSA compositions comprise copolymer according to the invention which includes in the elastic B block polar comonomer which renders the elastic B block hydrophilic. Such monomers may include polyethylene oxide acrylate, and N-vinylpyrrolidone, and mixtures thereof. The amount of such comonomer is sufficient to endow the copolymer with a hydrophilic nature to make it suited for use as a skin adhesive. Such amounts typically vary from 2 to 40 parts of such comonomer based uppon the total monomer weight in the elastomeric B block.

The copolymerization of the acrylic monomer. polar monomer, if used, and monomer to produce the thermoplastic block is by step-wise free radical polymerization. The acrylic monomer and polar monomer, if used, are dissolved in a suitable inert solvent, if needed, and polymerized by a first free radical polymerization utilizing a suitable iniferter as a free radical initiator source. Generally, from 0.01 to 5 percent by weight of iniferter based upon the total weight of polymerizable composition is used.

The iniferter is caused to dissociate to form free radicals by exposure to an appropriate energy source The preferred iniferter is one which will dissociate upon exposure to a radiant energy source, most preferably an ultraviolet radiant energy source. Upon exposure to the energy source, the iniferter dissociates to form free radicals which promote free radical polymerization. Upon completion of the free radical polymerization of the acrylic monomer and polar monomer, if used, the energy source is discontinued to permit the free radically polymerized segments to recombine with the terminator portion of the iniferter to form polymer segments. The second monomer charge is then introduced, which is polymerizable to the reinforcing thermoplastic polymer block, and the new mixture is exposed to the energy source to cause dissociation of the terminator radical and free radical polymerization of the second monomer charge onto the first polymer segment, that now being the initiater of the second free radical polymerization. Upon completion of polymerization of the second monomer charge, the energy source is terminated and the terminator portion of the iniferter recombines with the reinforcing thermoplastic polymer block to provide a block copolymer.

The particular energy source and its intensity are selected to result in dissociation of the iniferter to free radicals. When employing a photoiniferter which will dissociate upon exposure to ultraviolet light radiation, an ultraviolet light source is utilized. The intensity in rate of radiation is chosen so that it will advance the polymerization at a reasonable rate without deleteriously affecting the polymer segment being produced. An ultraviolet light source having a wave length on the order of 300 to 400 nm spaced approximately 10 cm

from the reactants to provide an exposure of 2 milliwatts per square centimeter has been found to produce suitable results. Reaction times on the order of 2 to 50 hours have been found to be typical, depending upon the intensity of the radiation, with faster reaction times being observed at greater intensities.

The reactants and any solvent employed are charged into an energy source-transparent vessel and therein subjected to the energy source. If the energy source is ultraviolet light radiation, a suitable ultraviolet light-transparent vessel is utilized.

The reaction is preferably conducted in a vessel with agitation to permit uniform exposure of the reactants to the energy source. While most of the reactions have been conducted by employing a batch process, it is possible to utilize the same technology in a continuous polymerization operation.

The reaction mixture may include a suitable inert solvent but it is not necessary since some of the monomeric materials are liquid themselves and may thus be charged into the reaction vessel without utilization of a solvent.

The solvent, if utilized in the free radical polymerization, may be any substance which is liquid in a temperature range of -10 °C to 50 °C, is substantially transparent to the energy source employed to permit dissociation of the iniferter to form free radicals, is inert to the reactants and product, and will not otherwise adversely affect the reaction. Suitable solvents include water, alkyl acetates such as ethyl acetate, alkanes such as hexane or heptane, and alcohols such as methyl alcohol, ethanol, isopropyl alcohol, and mixtures of one or more of these. Other solvent systems are useful. The amount of solvent is generally 30 to 80 percent by weight based on the total weight of the reactants and solvent. In addition to solution polymerization herein described, the copolymerization may be carried out by other well known techniques such as suspension, emulsion and bulk polymerization.

As previously mentioned, the copolymer may, when necessary or desirable, be blended with a compatible tackifying resin and/or plasticizer in order to optimize the ultimate tack and peel properties of the PSA composition. The use of such tack-modifiers is common in the art, as is described in the Handbook of Pressure-Sensitive Adhesive Technology edited by Donatas Satas (1982). Examples of useful tackifying resins include rosin, rosin derivatives, hydrogenated rosin derivatives, polyterpene resins, phenolic resins, coumarone-indene resins, and the like. A preferred tackifier is poly t-butyl styrene. Plasticizers which can be employed include the well-known extender oils (aromatic, paraffinic, or naphthenic), as well as a wide variety of liquid polymers. When used, tackifying resin is preferably added in an amount not to exceed 150 parts by weight per 100 parts by weight copolymer, and plasticizer may be added in an amount up to 50 parts by weight per 100 parts by weight copolymer.

It is also within the scope of this invention to include various other components in the adhesive formulation. For example, it may be desirable to include such materials as pigments, fillers, stabilizers, medicaments, or various polymeric additives.

The adhesive copolymer compositions prepared in accordance with the present invention are easily coated upon suitable flexible or inflexible backing materials by conventional coating techniques to produce adhesive coated sheet materials in accord with the present invention. The flexible backing material may be any material conventionally utilized as a tape backing or any other flexible material. Typical examples of flexible backing materials employed as conventional tape backings which may be useful for the adhesive compositions of the present invention include those made of paper, plastic films such as polypropylene, polyethylene, polyvinyl chloride, polyester (e.g., polyethylene terephthalate), cellulose acetate and ethyl cellulose.

Backings which are highly moisture vapor transmissive will have an MVT of at least 1000 grams per square meter per 24 hours. Suitable backings for high moisture vapor transmission tapes are disclosed in U.S. Pat. No. 3,121,021. Such tapes are breathable and porous. The copolymer PSA compositions of the invention provide adequate adhesive properties without unduly impairing the overall MVT of the porous backing. Preferred breathable backings are not highly porous but in fact are polymeric materials having little, if any, porosity but instead act as a means of transporting water molecules from the surface of the skin without permitting the passage of bacterial or viral infection to find its way to the skin. A preferred example of such a backing is provided by a film of polyurethane such as that formed by extrusion of Estane™ polyurethane. Other useful materials for backings are disclosed in U.S. Pat. Nos. 3,640,829, 3,770,537 and 3,870,590. Such breathable tapes promote healing as well as protect surgical incisions from contamination and harmful stress.

Backings may also be prepared of fabric such as woven fabric formed of threads of synthetic or natural materials such as cotton, nylon, rayon, glass, ceramic material, and the like or nonwoven fabric such as air laid webs of natural or synthetic fibers or blends of these. The backing may also be formed of metal, metalized polymeric films, or ceramic sheet materials. The coated sheet materials may take the form of any article conventionally known to be utilized with PSA compositions such as labels, tapes, signs, covers,

marking indicia, and the like.

The PSA compositions of the present invention may be coated by any of a variety of conventional coating techniques such as roll coating, spray coating, curtain coating, and the like. The PSA compositions may also be coated by extrusion coating, coextrusion, and hot-melt coating devices for this purpose. Primers may be used but they are not always necessary.

It should be noted that, while the adhesives of the present invention are imparted improved shear strength without subsequent crosslinking, if necessary, further solvent resistance and resistance to photochemical or oxidative forces may be obtained by crosslinking by employing radiant energy or chemical procedures without upsetting the "fourfold" balance of adhesive properties.

## Examples

The following detailed description includes exemplary preparations of ABA acrylic block copolymers and PSA compositions in accordance with the invention. All parts and percentages in the examples are by weight unless otherwise specified.

## Definitions of Terms

The number-average molecular weight ($M_n$), and weight-average molecular weight ($M_w$), are well known mathematical descriptions of the molecular weight distribution of a polymer sample.

The polydispersity, abbreviated "p", is a measure of the molecular weight distribution of a polymer and is defined as $M_w/M_n$.

Each of the foregoing is a well known term used by polymer chemists and others. Further explanation of the derivation of these terms may be found in Experimental Methods in Polymer Chemistry, Wiley and Sons, 1981, Chapter 3 entitled "Molecular Weight Averages", pages 57-61.

The block copolymers of the present invention are described in a short-hand way depending upon the monomer forming each block. For example, MMA-b-IOA-b-MMA refers to a copolymer having blocks ("b") of polymerized methyl methacrylate ("MMA") and a block of polymerized isooctyl acrylate ("IOA"). Numbers appearing beneath each block refer to the portion of the weight percent of the total copolymer weight represented by the particular block. For example

```
MMA-b-IOA-b-MMA
4.7  90.6   4.7
```

refers to an ABA block copolymer having two A (polymethyl methacrylate) blocks of 4.7 weight percent each and a single B midblock (polyisooctyl acrylate) of 90.6 weight percent.

Additionally, the following abbreviations represent the monomers designated:

AA = Acrylic Acid
IOA = Isooctyl Acrylate
EOA = Polyethylene Oxide Acrylate
MMA = Methyl Methacrylate
NVP = N-Vinylpyrrolidone

## Test Methods

The test methods used to evaluate the PSA coated flexible sheet materials of the examples are industry standard tests. The test methods which characterize the polymers of this invention are those which demonstrate its molecular architecture. For this purpose gel permeation chromatography (GPC) and inherent viscosity measurement results have been obtained. The performance of the acrylic block polymers of the invention as PSA compositions has been measured in tape form with the adhesives coated by standard methods onto conventional film backings. The standard tests are described in detail in various publications of the American Society for Testing and Materials (ASTM), Philadelphia, Pa., and the Pressure Sensitive Tape Council (PSTC), Glenview, Ill. The standard test methods are described in detail below. The reference source of each of the standard test methods is also given.

Gel Permeation Chromatography

The characterization of the molecular weight distribution of the polymers and the PSA's which utilize them has been by conventional gel permeation chromatography (GPC).

A Hewlett-Packard Model 1084B, high performance liquid chromatograph equipped with Styragel™ columns was used. The system was calibrated using polystyrene standards. All molecular weight averages are polystyrene equivalent molecular weights. The molecular weight averages and polydispersities were calculated according to accepted practices. GPC test methods are further explained in "Modern Size Exclusion Liquid Chromatography" Practice of Gel Permeation Chromatography, John Wiley and Sons, 1979.

Shear Strength
(Reference: ASTM: D3654-78; PSTC-7)

The shear strength is a measure of cohesiveness or internal strength of an adhesive. It is based upon the amount of force required to pull an adhesive strip from a standard flat surface in a direction parallel to the surface to which it has been affixed with a definite pressure. It is measured in terms of time (in minutes) required to pull a standard area of adhesive coated sheet material from a stainless steel test panel under stress of a constant, standard load.

The tests were conducted on adhesive coated strips applied to a stainless steel panel such that a 12.5 mm by 12.5 mm portion of each strip was in firm contact with the panel with one end portion of the tape being free. The panel with coated strip attached was held in a rack such that the panel forms an angle of 178° with the extended tape free end which is then tensioned by application of a force of one kilogram applied as a hanging weight from the free end of the coated strip. The 178° angle (2° less than 180°) is used to negate any peel forces thus insuring that only the shear forces are measured in an attempt to more accurately determine the holding power of the tape being tested. The time elapsed for each tape example to separate from the test panel is recorded as the shear strength.

Peel Adhesion
(Reference: ASTM D3330-78 PSTC-1 (11/75)

Peel adhesion is the force required to remove a coated flexible sheet material from a test panel measured at a specific angle and rate of removal. In the examples, this force is expressed in Newtons per 100 mm (N/100 mm) width of coated sheet. The procedure followed is:

1. A 12.5 mm width of the coated sheet is applied to the horizontal surface of a clean glass test plate with at least 12.7 lineal cm in firm contact. A hard rubber roller is used to apply the strip.
2. The free end of the coated strip is doubled back nearly touching itself so the angle of removal will be 180°. The free end is attached to the adhesion tester scale.
3. The glass test plate is clamped in the jaws of a tensile testing machine which is capable of moving the plate away from the scale at a constant rate of 2.3 meters per minute.
4. The scale reading in Newtons is recorded as the tape is peeled from the glass surface. The data is reported as the range of numbers observed during the test.

Preparation of Samples for Shear Strength and Peel Adhesion Testing

The shear holding power and peel adhesion are relative values which are influenced by how the samples to be tested are prepared and how they are coated. All of the examples reported in Tables I and II below were prepared by coating the copolymer from ethyl acetate solution to a dried thickness of 25 micrometers on to a primed 37 micrometer thick polyester film. The tapes were conditioned for 12 hours in a constant temperature testing room at 22°C and 50% relative humidity.

Inherent Viscosity Measurement

The shear holding power and the peel adhesion values in the tables are comparative values which have a direct relationship to the viscosity of these viscoelastic polymers. For the purpose of this invention the viscosity of dilute solutions of the polymers gives this information.

The inherent viscosity is measured by conventional means using a Cannon-Fenske #50 viscometer in a water bath controlled at 25°C to measure the flow time of 10 ml of a polymer solution (0.2 g per deciliter

polymer in methyl ethyl ketone). The examples and control examples being run for comparison were run under identical conditions. The measurement of the viscosity of dilute solutions of the adhesive clearly demonstrates the degree of improvement when compared to controls run under the same conditions. It is the comparative values which are significant and absolute figures are not required.

Moisture Vapor Permeability
(Reference: ASTM E-9680)

A modified Payne cup method is used. The method comprises the following steps:

(1) A 1.375 inch (35 mm) diameter sample of 1 mil (0.025 mm) thick material to be tested containing no perforations is cut and laminated to a porous nonwoven web having a moisture vapor transmission rate of about 10,000 grams per square meter per 24 hours at 40 °C and an 80% relative humidity differential.

(2) The sample is entered between the adhesive surfaces of two foil adhesive rings, each having a one-inch (2.54 cm) diameter hole. The holes of each ring are carefully aligned. Finger pressure is used to form a foil/sample/foil assembly that is flat, wrinkle-free and has no void areas in the exposed sample.

(3) A 4-ounce (0.14 kg) glass jar is filled half full of distilled water. The jar is fitted with a screw-on cap having a 1.50 inch (3.8 cm) diameter hole in the center thereof and with a 1.75 inch 4.445 cm) diameter rubber washer having a 1.12 inch (2.84 cm) diameter hole in its center.

(4) The rubber washer is placed on the lip of the jar and the foil/sample assembly is placed on the rubber washer. The lid is then screwed loosely on the jar.

(5) The assembly is placed in a chamber at 100 °F (38 °C) and 20 percent relative humidity for four hours.

(6) The cap is tightened inside the chamber so the sample material is level with the cap (no bulging) and the rubber washer is in proper seating position.

(7) The assembly is removed from the chamber and weighed immediately to the nearest 0.01 gram to determine the initial weight ($W_1$).

(8) The assembly is returned to the chamber for at least 18 additional hours.

(9) The assembly is removed from the chamber and weighed immediately to the nearest 0.01 gram to determine the final weight ($W_2$).

(10) The water vapor transmission in grams of water vapor transmitted per square meter of sample area in 24 hours is calculated according to the following formula:

$$MVT = \frac{(W_1 - W_2)\ 4.74 \times 10^4}{T}$$

$W_1$ = initial weight (grams)
$W_2$ = final weight (grams)
$T$ = time (hours)

When a 1/2 inch (1.27 cm) sample is tested, the formula is changed to the following:

$$MVT = \frac{(W_1 - W_2)\ 1.9 \times 10^5}{T}$$

(11) Three samples of each material should be run and the average taken.

Skin Adhesion

Adhesion to skin was determined on human volunteers. The adhesives were tested as 1 mil (0.025 mm) thick films on a 1 mil (0.025 mm) polyurethane backing. The film/backing laminate was cut into 1 x 3 inch (2.5 x 7.6 cm) strips which were applied to the (dry) backs of each of 6 individuals (i.e., 3 men and 3 women, randomly selected) who were lying on procedure tables in prone positions with arms at the sides and heads turned to one side. For each individual, three strips of the test material were applied to one or the other side of the spinal column and positioned such that the length of each strip was at a right angle to the spinal column. The strips were applied without tension or pulling of the skin and there was at least a 1/8 to 3/8 inch (0.32-0.95 cm) space between each strip. After all strips were in place, a 4.5 pound (9.9 kg) rubber roller according to the specifications found in the 7th Edition of the Pressure-Sensitive Tape Council

Brochure (1976), was rolled along the length of each strip, once in each direction, at a travel speed of about 3 inches (7.6 cm) per second, to assure even pressure application to each strip. When rolling the strip, no manual pressure was applied to the roller.

To determine the adhesive value, each strip was removed using a conventional adhesion tester having a 25# test line and a 1-inch (2.54 cm) clip attached to the test line. The clip was attached to the edge of the strip which is farthest from the spinal cord, the clip being attached by manually lifting about 1/2-inch (1.27 cm) of that edge of the strip and attaching the clip thereto. This orientation permitted the strip to be removed towards the spine so that pull was with the direction of fine hair growth on the back. This was facilitated by positioning the adhesion tester opposite the side of the individual's back from which the strip was to be removed. The adhesion tester was aligned with, and was at the same height as, the strip to be removed. An example of a suitable adhesion tester for use in this test comprises a conventional motor driven screw with moving carriage and a transducer. Connection to the transducer was a load cell accessory. Removal force placed on the transducer resulted in a signal change which was passed through a readout meter to a strip chart recorder.

The strip was pulled over itself in a plane parallel (180°) to the back and the rate of removal is 6 inches (15.2 cm) per minute. To determine skin adhesion as first applied ($T_0$), the strip is removed within about 5 minutes of its application to the back. The adhesion after 48 hours ($T_{48}$) of application is measured in the same manner after a residence time on the subject of 48 hours. Preferred adhesive tapes will have a $T_o$ of at least about 0.50 N/100 mm and a $T_{48}$ of at least about 0.40 N/100 mm.

Examples 1-3

Examples 1, 2 and 3 are representative of the photopolymerized, acrylic block copolymers of the invention. They have triblock architecture. The endblocks are firmer having a higher glass transition temperature ($T_g$); the midblocks are more elastic having lower $T_g$.

Example 1

Example 1

MMA - b - IOA - b - MMA
4.7 90.6 4.7

7 grams of isooctyl acrylate (IOA) monomer, 0.02 grams of xylylene bis(N,N-diethyl dithiocarbamate) (XDC) photoiniferter and 4 grams of ethyl acetate were charged to a cylindrical reaction bottle which was purged for 10 minutes with nitrogen before sealing and placing in a roller mechanism. The mixture was subjected to the ultraviolet radiation from six General Electric 15 watt cylindrical black light lamps for 24 hours. During this period of polymerization the reaction was monitored by nuclear magnetic resonance (NMR). When the vinyl peak was no longer detectable, the ultraviolet radiation source was turned off. The reaction bottle was removed from the roller mechanism and unsealed, to permit the addition of a second monomer. 2 grams of methyl methacrylate (MMA) and an additional 7 grams of ethyl acetate were added to the reaction mixture. The reaction bottle thus charged, was purged with nitrogen for 10 minutes, sealed and placed in the roller mechanism to be subjected to more ultraviolet radiation. The extent of conversion was monitored by proton NMR spectroscopy. The resulting segmented copolymer was collected for testing. The test results are recorded in Table I.

Example 2

MMA - b - IOA/AA - b - MMA
6.6 85.1/1.7 6.6

The procedure of Example 1 was repeated. The charges of monomers and initiator and solvent were as follows: IOA (6.87 g), acrylic acid (AA) 0.14 g, photoiniferter (XDC) 0.02 g and ethyl acetate (4.0 g). This

mixture was block polymerized by the addition of 2.0 g of methyl methacrylate, as in Example 1. The resulting segmented copolymer was collected for testing.

Example 3

$$\underset{5.4}{MMA} - b - \underset{87.9/1.3}{IOA/AA} - b - \underset{5.4}{MMA}$$

The procedure for Examples 1 and 2 was followed. The charges of monomer were varied to show the effects of variation in molecular weight, dispersity and monomer ratios.

TABLE I

| Ex. No. | Copolymer Composition | $M_n$ | $M_w$ | p | I.V. (dl/g) | Shear Minutes | Adhesion (N/100 mm) |
|---|---|---|---|---|---|---|---|
| 1 | MMA-b-IOA-b-MMA 4.7 90.6 4.7 | 157,310 | 301,138 | 1.9 | 0.47 | 18 | 63 |
| 2 | MMA-b-IOA/AA-b-MMA 6.6 85.4/1.7 6.6 | 137,981 | 294,718 | 2.13 | 0.48 | 105 | 69 |
| 3 | MMA-b-IOA/AA-b-MMA 5.4 87.9/1.3 5.4 | 111,287 | 477,166 | 2.43 | 0.37 | 77 | 44 |

Comparative Examples A-D

Examples A, B, C and D, respectively, are comparative examples which are not block copolymers. They have been polymerized by thermal polymerization in random form. The lack of phase separation is evident in the low shear strength values reported in Table II.

Example A

IOA/MMA -- 83/17

Random, Thermal Polymerization

70.0 grams of isooctyl acrylate (IOA) monomer, 14.4 grams of methyl methacrylate (MMA) monomer, 0.17 grams of 2,2′- azobis (isobutyronitrile) thermal free radical initiator (available commercially as Vazo 64™) in 84.4 grams of ethyl acetate were charged to a reaction bottle. The reaction mixture was purged for 3 minutes with nitrogen and then the bottle sealed and placed in a Launder-O-Meter™ roller-type agitation device at 60° C for 24 hours to permit reaction to form a random copolymer. A sample of the copolymer was collected for testing and the test results are recorded in Table II.

Example B

IOA/MMA -- 87/13

Example C

IOA/MMA -- 93.3/6.7

Example D

IOA/AA/MMA -- 86/1.3/12.7

The free radical polymerization of monomers which result in randomly copolymerized polymers was carried out in the same manner as Example A. The monomer charges were varied to obtain different monomer ratios of copolymer product. The random copolymers of Examples A through D were collected for testing and the test results are recorded in Table II.

TABLE II

| Ex. No. | Polymer Composition | $M_n$ | $M_w$ | p | I.V. (dl/g) | Shear (Minutes) | Adhesion (N/100 mm) |
|---|---|---|---|---|---|---|---|
| A | IOA/MMA 83/17 | 230,211 | 764,909 | 3.3 | 1.03 | 3.2 | 56 |
| B | IOA/MMA 87/13 | 104,944 | 692,370 | 6.6 | 0.91 | 0.6 | 57 |
| C | IOA/MMA 93.6/6.7 | 195,835 | 943,942 | 4.8 | 1.14 | 0.3 | 63 |
| D | IOA/AA/MMA 86/1.3/12.7 | 360,384 | 845,275 | 2.3 | 1.13 | 2.5 | 60 |

The low shear values clearly demonstrate the weakness in cohesive strength as measured by shear holding power. Comparative Examples A, B, C and D are random copolymers which lack the phase separation enhancement of the block copolymers of the invention.

Example 4

**Styrene "Mac"-b-IOA/AA-b-Styrene "Mac"**
**92/8**
**1.35 - 97.3 - 1.35**

(a) An 240 ml cylindrical reaction bottle was charged with 50 grams of isooctyl acrylate (IOA) monomer; 4.35 grams of acrylic acid (AA) monomers; 0.155 grams of xylylene bis(N,N-diethyl dithiocarbamate) photoiniferter (XDC) and 50 grams of ethyl acetate. The reaction bottle was purged for 10 minutes with pure nitrogen before sealing and placing in a roller device where it was subjected to ultraviolet radiation from six 15 watt cylindrical black light lamps for 48 hours. During the period of exposure the reaction was monitored by testing small removed samples by use of a nuclear magnetic resonance (NMR) spectrophotometer which indicated essentially quantitative conversion was accomplished.
(b) A 9.70 gram aliquot of the reaction solution from Step (a) was charged to a 120 ml cylindrical reaction bottle together with 0.14 g of a 13,300 average molecular weight polystyryl ethyl methacrylate macromolecular monomer (styrene "Mac"), and 5 g of ethyl acetate. The reaction bottle was purged with nitrogen, sealed, placed in a roller device, exposed to ultraviolet radiation, monitored by NMR until it indicated quantitative conversion. The resulting segmented copolymer was collected, and then coated to a dried thickness of 25 micrometers on a primed 37 micrometer thick polyester film. The coated film was then tested according to PSTC-7 for shear strength and PSTC-1 for peel adhesion. The results were: (1) shear holding power = 16 minutes; peel adhesion = 79 Newtons per 100 millimeter width of coated film.

Example 5

**MM"Mac"-b-IOA/AA-b-MM"Mac"**
**92/8**
**10 - 80 - 10**

(a) The procedure of Example 4 was repeated. The initial charge of monomers was isooctyl acrylate (IOA) 230 g; acrylic acid (AA) 20 g; the iniferter was xlylene bis (N,N-diethyl dithiocarbamate) (XDC) 1.0 g; and the solvent was ethyl acetate 400 g. These were charged to an 240 ml cylindrical reaction bottle, subjected to ultraviolet radiation for 48 hours under the same conditions as Example 4.
(b) A 10.28 gram aliquot of the reaction solution from step (a) was then charged together with 1.0 g of 10,300 average molecular weight, methyl methacrylate macromolecular monomer (MM"Mac") and 5 g of ethyl acetate to a purged reaction bottle where they were sequentially block polymerized to produce a segmented copolymer of the invention. A film, coated as in Example 4 was then tested which gave the following results:
(1) Shear holding power = 10 minutes;
(2) Peel adhesion = 57 Newtons per 100 millimeters width of coated film.

Example 6

**TBPMA-b-IOA-b-TBPMA**
**11 - 78 - 11**

(a) The sequential block polymerization procedure of Example 4 was repeated. The charge of isooctyl acrylate (IOA), mid-block monomer, was 7 g; the amount of xylylene bis(N,N-diethyl dithiocarbamate) (XDC) initiator was 0.02 g and the amount of ethyl acetate solvent was 4 g.

(b) The reaction solution from Step (a) was block polymerized with 2 g of tertiary-butylphenyl methacrylate (TBPMA) monomer to produce a segmented acrylic copolymer of the invention. A film, coated as in Example 4 was then tested to measure the physical properties of the copolymer with the following results: (1) shear holding power = 35 minutes; peel adhesion = 48 Newtons per 100 millimeter width of the coated film.

Example 7

**TBPMA-b-$\overline{\text{IOA/AA}}$-b-TBPMA**
**98/2**
**11 - 78 - 11**

(a) The sequentially block polymerization procedure of Example 4 was repeated. The initial charge of monomers, initiator and solvent was as follows: 6.93 g of IOA; 0.16 g AA; 0.02 g XDC and 4.0 ethyl acetate.

(b) To the reaction solution of Step (a) was added 2 g of tertiary-butylphenyl methacrylate (TBPMA) which was then block polymerized with the product of Step (a) to produce a segmented acrylic copolymer of the invention. A film coated as in Example 4 was tested to measure the pressure-sensitive adhesive properties with the following results:

(1) Shear holding power = 133 minutes

(2) Peel adhesion 55 Newtons per 100 millimeter width of coated film.

Control Example E

**Styrene-b-$\overline{\text{IOA/AA}}$-b-Styrene**
**96/4**
**10 - 80 - 10**

(a) The initial charge of monomers, initiator and solvent for the sequential block polymerization was as follows: 250 g IOA; 10.4 g AA; 1.04 g XDC and 417 g ethyl acetate.

(b) 20 grams of polymerized product from Step (a) was charged with 20 grams of styrene to produce segmented but only partially acrylic copolymer. The extent of conversion was monitored by proton NMR spectroscopy. This is not the invention. A film coated as in Example 4 of this comparative Example of non-pressure-sensitive adhesive produces the following results:

(1) Shear holding power = 10 minutes.

(2) Peel adhesion = too low to measure.

This is a clear indication that having a high $T_g$ component such as styrene does not produce a segmented copolymer with the required balance of a truly pressure-sensitive adhesive (PSA).

Examples 8-47

Examples 8-47 were prepared according to the methods described above, coated onto 20 micrometer Estane™ polyurethane backings, and tested for MVT and skin adhesion properties.

| Ex. | Block Copolymer | | | B:A Ratio | MVT g/cm² 24 hrs | Skin Adhesion (N/100 mm) $T_0$ | $T_{48}$ |
|---|---|---|---|---|---|---|---|
| | MMA-b-IOA/EOA-b-MMA | | | | | | |
| 8 | 6.3 | 72/15 | 6.3 | 87:13 | 2442 | | |
| 9 | 4.4 | 75/16 | 4.4 | 91:9 | 8000 | | |
| 10 | 6.3 | 68/19 | 6.3 | 87:13 | 3067 | | |
| 11 | 4.4 | 71/20 | 4.4 | 91:9 | 8716 | | |
| | MMA-b-IOA-AA-b-MMA | | | | | | |
| 12 | 4.6 | 86/4 | 4.6 | 91:9 | 1000 | 12.3 | 6.2 |
| 13 | 6.6 | 83/4 | 6.6 | 87:13 | 1000 | 11.4 | 6.5 |
| 14 | 4.6 | 83/7 | 4.6 | 91:9 | 1000 | 9.4 | 6.8 |
| 15 | 6.6 | 80/7 | 4.6 | 87:13 | 1000 | 6.8 | 7.1 |
| | MMA-b-IOA/EOA-b-MMA | | | | | | |
| 16 | 5.0 | 83/17 | 5.0 | 90:10 | 3650 | 3.4 | 2.2 |
| 17 | 7.5 | 82/18 | 7.5 | 85:15 | 3831 | 2.9 | 1.3 |
| 18 | 7.5 | 77/23 | 7.5 | 85:15 | 2920 | 2.1 | 0.9 |
| 19 | 10.0 | 78/22 | 10.0 | 80:20 | 2710 | 2.6 | 1.6 |
| 20 | 7.5 | 75/25 | 7.5 | 85:15 | 3500 | 2.4 | 1.1 |
| 21 | 10.0 | 75/25 | 10.0 | 80:20 | 3160 | 2.6 | 1.5 |
| 22 | 10.0 | 67/33 | 10.0 | 80:20 | 3980 | 2.4 | 1.3 |
| 23 | 12.5 | 67/33 | 12.5 | 75:25 | 3620 | 2.8 | 1.6 |

| | | | | | | | |
|---|---|---|---|---|---|---|---|
| | MMA-b-IOA/AA-b-MMA | | | | | | |
| 24 | 7.5 | 92/8 | 7.5 | 85:15 | 302 | 2.0 | 1.8 |
| 25 | 10.0 | 92/8 | 10.0 | 80:20 | 336 | 1.8 | 3.3 |
| 26 | 7.5 | 88/12 | 7.5 | 85:15 | 481 | 1.4 | 1.3 |
| 27 | 10.0 | 88/12 | 10.0 | 80:20 | 1192 | 1.1 | 0.8 |
| 28 | 12.5 | 88/12 | 12.5 | 75:25 | 382 | 0.5 | 0.5 |
| 29 | 7.5 | 80/20 | 7.5 | 85:15 | 184 | (too firm to measure) | |
| 30 | 10.0 | 80/20 | 10.0 | 80:20 | 290 | (too firm to measure) | |
| 31 | 12.5 | 80/20 | 12.5 | 75:25 | 263 | No tack | |
| | IOA-b-NVP-b-IOA | | | | | | |
| 32 | 25 | 50 | 25 | 50:50 | 2185 | No tack | |
| 33 | 35 | 30 | 35 | 30:70 | --- | No tack | |
| | NVP-b-IOA/AA-b-NVP | | | | | | |
| 34 | 30 | 90/10 | 30 | 40:60 | Could not be coated - gelled | | |
| 35 | 20 | 90/10 | 20 | 60:40 | 414 | No tack | |
| | MMA-b-IOA-AA-b-MMA | | | | | | |
| 36 | 7.5 | 98/2 | 7.5 | 85:15 | 6912 | 3.9 | -- |
| 37 | 10.0 | 98/2 | 10.0 | 80:20 | 5306 | 3.8 | -- |
| | MMA-b-IOA/MMA-b-MMA | | | | | | |
| 38 | 7.5 | 96/4 | 7.5 | 85:15 | 566 | 5.1 | -- |
| 39 | 10.0 | 96/4 | 10.0 | 80:20 | 517 | 6.3 | -- |
| | MMA-b-IOA/NVP-b-MMA | | | | | | |
| 40 | 7.5 | 98/2 | 7.5 | 85:15 | 8880 | 1.1 | -- |
| 41 | 10.0 | 98/2 | 10.0 | 80:20 | 9796 | 1.3 | -- |
| 42 | 7.5 | 96/4 | 7.5 | 85:15 | 8755 | 1.6 | -- |
| 43 | 10.0 | 96/4 | 10.0 | 80:20 | 8466 | 1.8 | -- |
| | MMA-b-IOA/EOA/AA-b-MMA | | | | | | |
| 44 | 7.5 | 81/ 17.3/ 1.7 | 7.5 | 85:15 | 6023 | 2.2 | 0.3 |
| 45 | 10.0 | 81/ 17.3/ 1.7 | 10.0 | 80:20 | 10809 | 1.5 | 0.2 |
| | MMA-b-IOA/EOA/NVP-b-MMA | | | | | | |
| 46 | 7.5 | 81/ 17.3/ 1.7 | 7.5 | 85:15 | 2192 | 3.4 | 1.0 |
| 47 | 10.0 | 81/ 17.3/ 1.7 | 10.0 | 80:20 | 1435 | 3.1 | 1.1 |

While this invention has been described in connection with specific embodiments, it should be understood that it is capable of further modification. The claims herein are intended to cover those variations which one skilled in the art would recognize as the chemical equivalent of what has been described here.

## Claims

### Claims for the following Contracting States : BE, CH, ES, LI, SE

1. A pressure-sensitive adhesive composition characterized by comprising:
   (a) a block copolymer represented by the general formula $I(BAT)_n$
   wherein
   I represents the free radical initiator portion of an iniferter of the formula $I(T)_n$;
   T represents the termination portion of said iniferter;
   n is an integer of at least 2;
   B represents an elastic acrylic polymer block having a glass transition temperature of less than 0 °C; and
   A represents a normally thermoplastic polymer block having a glass transition temperature of at least 30 °C
   wherein said A-block is formed of a monomer selected from the group consisting of methyl methacrylate, polystyrylethyl methacrylate macromer, methyl methacrylate macromer, acrylic acid, acrylonitrile, isobornyl methacrylate, N-vinyl pyrrolidone, and mixtures thereof,
   the weight ratio of said B-block to said A-block in said block copolymer being from 95:5 to 50:50; and
   (b) 0 to 150 parts by weight tackifier per 100 parts block copolymer.

2. The pressure-sensitive adhesive composition of claim 1 further characterized by said elastic acrylic polymer block being formed of a monomer comprising from 75 to 100 percent by weight of at least one monomeric acrylic or methacrylic acid ester of a non-tertiary alcohol, said alcohol having from 1 to 14 carbon atoms with the average number of carbon atoms being about 4 to 12, and from zero to 25 parts by weight of at least one polar monomer copolymerizable with said monomeric acrylic or methacrylic acid ester.

3. The pressure sensitive adhesive composition of claim 2 further characterized by the selection of such monomeric acrylic or methacrylic acid ester from isooctyl acrylate, 2-ethylhexyl acrylate, 2-methylbutyl acrylate, and butyl acrylate and the selection of said polar monomer from acrylic acid, methacrylic acid, itaconic acid, acrylamide, methacrylamide, acrylonitrile, methacrylonitrile, N-vinyl pyrrolidone, and polyethylene oxide acrylate.

4. The pressure sensitive adhesive composition of any preceding claim further characterized by the representation of said block copolymer by the formula

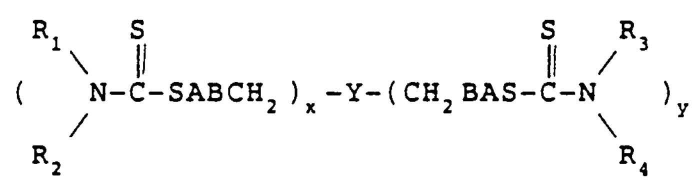

   wherein
   $R_1$, $R_2$, $R_3$ and $R_4$ are aliphatic or aromatic moieties which can be the same or different and which do not prevent the ability of I to promote free radical polymerization or with T to recombine with I or a polymer free radical segment including I;
   Y is a linking group having a functionality of x + y which does not substantially interfere with the ability of I to promote free radical polymerization or the ability of T to recombine with I or a polymer free radical segment including I; and
   x and y are each integers of at least 1 and the sum of x + y is not more than 12.

5. The pressure sensitive adhesive composition of any preceding claim further characterized by the selection of said iniferter from the group consisting of xylylene bis (N,N-diethyl dithiocarbamate) and xylylene bis (N-carbazolyl dithiocarbamate).

6. An adhesive coated sheet material further characterized by comprising a backing at least partially coated over at least one major surface with the pressure-sensitive adhesive composition of any

preceding claim.

**7.** The adhesive coated sheet of claim 6 further characterized by its ability to transport moisture therethrough.

**8.** The adhesive coated sheet material of any one of claims 6 to 7 further characterized by having an MVT of at least 1000 grams per square meter per 24 hours.

**9.** The adhesive coated sheet material of any one of claims 6 to 8 further characterized by having a $T_0$ of at least 0.50 N/100 and a $T_{48}$ of at least 0.40 N/100 mm.

**10.** A method of making the pressure-sensitive adhesive composition of any preceding claim characterized by comprising:
(a) mixing (1) an iniferter represented by the general formula $I(T)_n$ capable upon being subjected to an appropriate energy source of forming free radicals $I(\bullet)_n$ and nT• wherein n is an integer of at least 2, I• is a highly reactive free radical capable of initiating free radical polymerization, and T• is a less reactive free radical which is generally much less capable of initiating free radical polymerization than I• but will rejoin with $I(\bullet)_n$ or a free radical polymer segment free radically polymerized with $I(\bullet)_n$ upon termination of said energy source and (2) a first monomer charge comprising acrylic monomer which is free radically polymerizable in the presence of $I(\bullet)_n$ to form an acrylic polymer block having a glass transition temperature of less than 0 °C;
(b) exposing the mixture of (a) to an energy source capable of forming free radicals $I(\bullet)_n$ and nT•;
(c) maintaining the exposure of (b) until said first monomer charge polymerizes with $I(\bullet)_n$ to form a free radical polymer segment represented by the formula $I(B\bullet)_n$ wherein B represents an elastic acrylic polymer block having a glass transition temperature of less than 0 °C formed of said first monomer charge;
(d) terminating said exposure whereby to cause $I(B\bullet)_n$ and nT• to combine to form a polymer represented by the formula $I(BT)_n$;
(e) mixing $I(BT)_n$ with a second monomer charge comprising monomer which is free radically polymerizable in the presence of $I(B\bullet)_n$ to a thermoplastic block having a glass transition temperature of at least 30 °C;
(f) exposing $I(BT)_n$ to an energy source capable of forming free radicals $I(B\bullet)_n$ and nT•;
(g) maintaining the exposure of (f) until said second monomer charge polymerizes with $I(B\bullet)_n$ to form a free radical block copolymer segment represented by the formula $I(BA\bullet)_n$ wherein A represents a normally thermoplastic polymer block having a glass transition temperature of at least 30 °C formed of said second monomer charge wherein said A-block is formed of said second monomer selected from methyl methacrylate, polystyrylethyl methacrylate macromer, methyl methacrylate macromer, acrylic acid, acrylonitrile, isobornyl methacrylate, N-vinyl pyrrolidone, and mixtures thereof;
(h) terminating the exposure of (f) whereby $I(BA\bullet)_n$ and nT• combine to form a block copolymer represented by the formula $I(BAT)_n$; and
(i) blending a compatible tackifier with said block copolymer at the ratio of from 0 to 150 parts by weight tackifier per 100 parts by weight of said copolymer.

**Claims for the following Contracting States : DE, FR, GB, IT, NL**

**1.** A pressure-sensitive adhesive composition characterized by comprising:
(a) a block copolymer represented by the general formula $I(BAT)_n$
wherein
I represents the free radical initiator portion of an iniferter of the formula $I(T)_n$;
T represents the termination portion of said iniferter;
n is an integer of at least 2;
B represents an elastic acrylic polymer block having a glass transition temperature of less than 0 °C, said elastic acrylic polymer block comprising from 1 to 40 parts by weight of the total weight of said acrylic block of at least one polar comonomer copolymerizable with the monomer of said acrylic polymer block and
A represents a normally thermoplastic polymer block having a glass transition temperature of at least 30 °C

wherein said A-block is formed of a monomer selected from the group consisting of methyl methacrylate, polystyrylethyl methacrylate macromer, methyl methacrylate macromer, acrylic acid, acrylonitrile, isobornyl methacrylate, N-vinyl pyrrolidone, and mixtures thereof,

the weight ratio of said B-block to said A-block in said block copolymer being from 95:5 to 50:50; and

(b) 0 to 150 parts by weight tackifier per 100 parts block copolymer, provided that said pressure sensitive adhesive compositions in which said elastic acrylic polymer block comprises less than 5 parts by weight of the total weight of said acrylic block of said polar copolymer are disclaimed.

**2.** The pressure-sensitive adhesive composition of claim 1 further characterized by said elastic acrylic polymer block being formed of a monomer comprising from 75 to 99 percent by weight of at least one monomeric acrylic or methacrylic acid ester of a non-tertiary alcohol, said alcohol having from 1 to 14 carbon atoms with the average number of carbon atoms being about 4 to 12, and from one to 25 parts by weight of at least one polar monomer copolymerizable with said monomeric acrylic or methacrylic acid ester.

**3.** The pressure sensitive adhesive composition of claim 2 further characterized by the selection of such monomeric acrylic or methacrylic acid ester from isooctyl acrylate, 2-ethylhexyl acrylate, 2-methylbutyl acrylate, and butyl acrylate and the selection of said polar monomer from acrylic acid, methacrylic acid, itaconic acid, acrylamide, methacrylamide, acrylonitrile, methacrylonitrile, N-vinyl pyrrolidone, and polyethylene oxide acrylate.

**4.** The pressure sensitive adhesive composition of any preceding claim further characterized by the representation of said block copolymer by the formula

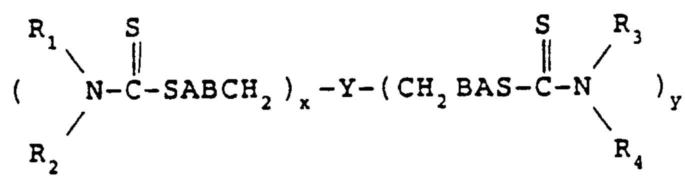

wherein

$R_1$, $R_2$, $R_3$ and $R_4$ are aliphatic or aromatic moieties which can be the same or different and which do not prevent the ability of I to promote free radical polymerization or with T to recombine with I or a polymer free radical segment including I;

Y is a linking group having a functionality of $x+y$ which does not substantially interfere with the ability of I to promote free radical polymerization or the ability of T to recombine with I or a polymer free radical segment including I; and

x and y are each integers of at least 1 and the sum of $x+y$ is not more than 12.

**5.** The pressure sensitive adhesive composition of any preceding claim further characterized by the selection of said iniferter from the group consisting of xylylene bis (N,N-diethyl dithiocarbamate) and xylylene bis (N-carbazolyl dithiocarbamate).

**6.** An adhesive coated sheet material further characterized by comprising a backing at least partially coated over at least one major surface with the pressure-sensitive adhesive composition of any preceding claim.

**7.** The adhesive coated sheet of claim 6 further characterized by its ability to transport moisture therethrough.

**8.** The adhesive coated sheet material of any one of claims 6 to 7 further characterized by having an MVT of at least 1000 grams per square meter per 24 hours.

**9.** The adhesive coated sheet material of any one of claims 6 to 8 further characterized by having a $T_0$ of at least 0.50 N/100 and a $T_{48}$ of at least 0.40 N/100 mm.

**10.** A method of making the pressure-sensitive adhesive composition of any preceding claim characterized by comprising:

(a) mixing (1) an iniferter represented by the general formula $I(T)_n$ capable upon being subjected to an appropriate energy source of forming free radicals $I(\bullet)_n$ and nT• wherein n is an integer of at least 2, I• is a highly reactive free radical capable of initiating free radical polymerisation, and T• is a less reactive free radical which is generally much less capable of initiating free radical polymerization than I• but will rejoin with $I(\bullet)_n$ or a free radical polymer segment free radically polymerized with $I(\bullet)_n$ upon termination of said energy source and (2) a first monomer charge comprising acrylic monomer and polar comonomer which monomers are free radically polymerizable in the presence of $I(\bullet)_n$ to form an acrylic copolymer block having a glass transition temperature of less than 0 °C;

(b) exposing the mixture of (a) to an energy source capable of forming free radicals $I(\bullet)_n$ and nT•;

(c) maintaining the exposure of (b) until said first monomer charge polymerizes with $I(\bullet)_n$ to form a free radical polymer segment represented by the formula $I(B\bullet)_n$ wherein B represents an elastic acrylic copolymer block having a glass transition temperature of less than 0 °C formed of said first monomer charge;

(d) terminating said exposure whereby to cause $I(B\bullet)_n$ and nT• to combine to form a polymer represented by the formula $I(BT)_n$;

(e) mixing $I(BT)_n$ with a second monomer charge comprising monomer which is free radically polymerizable in the presence of $I(B\bullet)_n$ to a thermoplastic block having a glass transition temperature of at least 30 °C;

(f) exposing $I(BT)_n$ to an energy source capable of forming free radicals $I(B\bullet)_n$ and nT•;

(g) maintaining the exposure of (f) until said second monomer charge polymerizes with $I(B\bullet)_n$ to form a free radical block copolymer segment represented by the formula $I(BA\bullet)_n$ wherein A represents a normally thermoplastic polymer block having a glass transition temperature of at least 30 °C formed of said second monomer charge wherein said A-block is formed of said second monomer selected from methyl methacrylate, polystyrylethyl methacrylate macromer, methyl methacrylate macromer, acrylic acid, acrylonitrile, isobornyl methacrylate, N-vinyl pyrrolidone, and mixtures thereof;

(h) terminating the exposure of (f) whereby $I(BA\bullet)_n$ and nT• combine to form a block copolymer represented by the formula $I(BAT)_n$; and

(i) blending a compatible tackifier with said block copolymer at the ratio of from 0 to 150 parts by weight tackifier per 100 parts by weight of said copolymer.

**Patentansprüche**

**Patentansprüche für folgende Vertragsstaaten : BE, CH, ES, LI, SE**

**1.** Haftklebstoff-Zusammensetzung, umfassend:

(a) ein durch die allgemeine Formel $I(BAT)_n$ dargestelltes Blockcopolymer,

worin sind:

I der radikalische Initiatorteil eines Iniferters der Formel $I(T)_n$;

T der Terminatorteil des Iniferters;

n ganzzahlig und mindestens 2;

B ein elastischer Acrylpolymerblock mit einer Glasübergangstemperatur von weniger als 0 °C; und

A ein normalerweise thermoplastischer Polymerblock mit einer Glasübergangstemperatur von mindestens 30 °C,

worin der A-Block aus einem Monomer gebildet wird, ausgewählt aus der Gruppe, bestehend aus Methylmethacrylat, Polystyrylethylmethacrylat-Makromer, Methylmethacrylat-Makromer, Acrylsäure, Acrylnitril, Isobornylmethacrylat, N-Vinylpyrrolidon und deren Mischungen,

das Gewichtsverhältnis des B-Blocks zum A-Block in dem genannten Blockcopolymer 95:5 bis 50:50 beträgt; und

(b) 0 bis 150 Gewichtsteile Klebrigmacher pro 100 Teile Blockcopolymer.

**2.** Haftklebstoff-Zusammensetzung nach Anspruch 1, ferner dadurch gekennzeichnet, daß der elastische Acrylpolymerblock von einem Monomer gebildet wird, umfassend 75 % bis 100 Gewichtsprozent von mindestens einem monomeren Acryl- oder Methacrylsäureester eines nichttertiären Alkohols, wobei der Alkohol 1 bis 14 Kohlenstoffatome mit einer mittleren Zahl von 4 bis 12 Kohlenstoffatomen hat, sowie 0 bis 25 Gewichtsteile von mindestens einem polaren Monomer, das mit dem monomeren Aryl- oder

Methacrylsäureester copolymerisierbar ist.

**3.** Haftklebstoff-Zusammensetzung nach Anspruch 2, ferner gekennzeichnet durch die Wahl solcher monomerer Acryl- oder Methacrylsäureester aus Isooctylacrylat, 2-Ethylhexylacrylat, 2-Methylbutylacrylat und Butylacrylat, sowie die Wahl des polaren Monomers aus Acrylsäure, Methacrylsäure, Itaconsäure, Acrylamid, Methacrylamid, Acrylnitril, Methacrylnitril, N-Vinylpyrrolidon und Polyethylenoxidacrylat.

**4.** Haftklebstoff-Zusammensetzung nach einem der vorgenannten Ansprüche, ferner dadurch gekennzeichnet, daß das Blockcopolymer dargestellt wird durch die Formel:

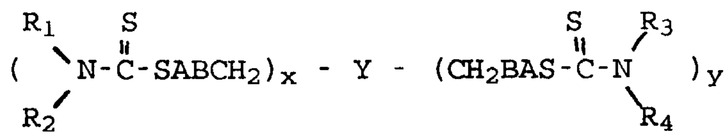

worin sind:

$R_1$, $R_2$, $R_3$ und $R_4$ aliphatische oder aromatische Teile, die gleich oder verschieden sein können und die die Fähigkeit von I zur Förderung der Radikalpolymerisation oder die Fähigkeit von T zur Rekombination mit I oder einem radikalischen Polymersegment, einschließlich I, nicht verhindern;

Y eine verbindende Gruppe mit einer Funktionalität von x + y, die im wesentlichen die Fähigkeit des I zur Förderung der Radikalpolymerisation oder die Fähigkeit von T zur Rekombination mit I oder einem radikalischen Polymersegment, einschließlich I, nicht verhindert; und

x und y jeweils ganze Zahlen von mindestens 1, wobei die Summe von x + y nicht größer ist als 12.

**5.** Haftklebstoff-Zusammensetzung nach einem der vorgenannten Ansprüche, ferner gekennzeichnet durch die Wahl des Iniferters aus der Gruppe, bestehend aus Xylylen- bis(N,N-diethyldithiocarbamat) und Xylylen-bis(N-carbazolyldithiocarbamat).

**6.** Adhäsiv beschichtetes Folienmaterial, ferner umfassend einen Träger, der mindestens teilweise auf mindestens einer der größeren Oberflächen mit der Haftklebstoff-Zusammensetzung nach einem der vorgenannten Ansprüche beschichtet ist.

**7.** Adhäsiv beschichtete Folie nach Anspruch 6, ferner gekennzeichnet durch ihre Fähigkeit zum Transport von Feuchtigkeit durch sie hindurch.

**8.** Adhäsiv beschichtetes Folienmaterial nach Anspruch 6 oder 7, ferner dadurch gekennzeichnet, daß es ein MVT von mindestens 1.000 $g/m^2$ pro 24 Stunden hat.

**9.** Adhäsiv beschichtetes Folienmaterial nach Anspruch 6 bis 8, ferner dadurch gekennzeichnet, daß es eine $T_o$ von mindestens 0,50 N/100 mm und eine $T_{48}$ von mindestens 0,40 N/100 mm hat.

**10.** Verfahren, zur Herstellung der Haftklebstoff-Zusammensetzung nach einem der vorgenannten Ansprüche, umfassend:

(a) Mischen von (1) eines Iniferters, der durch die allgemeine Formel $I(T)_n$ dargestellt wird und der bei Exponieren an einer geeigneten Energiequelle Radikale $I(\bullet)_n$ und nT• bilden kann, wobei n eine ganze Zahl von mindestens 2 ist, I• ein hochreaktionsfähiges Radikal, welches eine Radikalpolymerisation starten kann, und T• ein weniger reaktionsfähiges Radikal, welches im allgemeinen sehr viel weniger in der Lage ist, eine Radikalpolymerisation zu starten als I•, sich jedoch bei Abschalten der genannten Energiequelle mit $I(\bullet)_n$ oder einem radikalischem Polymersegment, das mit $I(\bullet)_n$ eine Radikalpolymerisation eingegangen ist, wiedervereinigen kann und (2) Mischen von einer ersten Monomercharge, umfassend ein Acrylmonomer, das in Gegenwart von $I(\bullet)_n$ eine Radikalpolymerisation eingehen kann, um einen Acrylpolymerblock mit einer Glasübergangstemperatur von weniger als 0 °C zu bilden;

(b) Exponieren der Mischung von (a) an einer Energiequelle, die in der Lage ist, Radikale $I(\bullet)_n$ und nT• zu bilden;

(c) Beibehalten der Exponierung von (b), bis die erste Monomercharge mit $I(\bullet)_n$ polymerisiert, um ein radikalisches Polymersegment zu bilden, welches durch die Formel $I(B\bullet)_n$ repräsentiert wird und worin B einen, aus der ersten Monomercharge gebildeten elastischen Acrylpolymerblock mit einer Glasübergangstemperatur von weniger als 0 °C darstellt;

(d) Beenden der Exponierung, wodurch eine Vereinigung von $I(B\bullet)_n$ und $nT\bullet$ bewirkt wird, um ein Polymer zu bilden, welches durch die Formel $I(BT)_n$ repräsentiert wird;

(e) Mischen von $I(BT)_n$ mit einer zweiten Monomercharge, umfassend ein Monomer, das in Anwesenheit von $I(B\bullet)_n$ zu einem thermoplastisch verstärkenden Polymerblock mit einer Glasübergangstemperatur von mindestens 30 °C eine Radikalpolymerisation eingehen kann;

(f) Exponieren von $I(BT)_n$ an einer Energiequelle, die in der Lage ist, Radikale $I(\bullet)_n$ und $nT\bullet$ zu bilden;

(g) Beibehalten der Exponierung von (f), bis die zweite Monomercharge mit $I(B\bullet)_n$ polymerisiert, um ein radikalisches Blockcopolymersegment zu bilden, welches durch die Formel $I(BA\bullet)_n$ repräsentiert wird und worin A einen aus der zweiten Monomercharge gebildeten, normalerweise thermoplastischen Polymerblock mit einer Glasübergangstemperatur von mindestens 30 °C darstellt, worin der A-Block gebildet wird aus dem zweiten Monomer, ausgewählt aus Methylmethacrylat, Polystyrylethylmethacrylat-Makromer; Methylmethacrylat-Makromer, Acrylsäure, Acrylnitril, Isobornylmethacrylat, N-Vinylpyrrolidon und deren Mischungen;

(h) Beenden der Exponierung von (f), wodurch eine Vereinigung von $I(BA\bullet)_n$ und $nT\bullet$ bewirkt wird, um ein Blockcopolymer zu bilden, welches durch die Formel $I(BAT)_n$ repräsentiert wird; und

(i) Compoundieren eines kompatiblen Klebrigmachers mit dem Blockpolymer im Anteil von 0 bis 150 Gewichtsteilen Klebrigmachers pro 100 Gewichtsteile des Copolymers.

**Patentansprüche für folgende Vertragsstaaten : DE, FR, GB, IT, NL**

1. Haftklebstoff-Zusammensetzung, umfassend:

(a) ein durch die allgemeine Formel $I(BAT)_n$ dargestelltes Blockcopolymer,

worin sind:

I der radikalische Initiatorteil eines Iniferters der Formel $I(T)_n$;

T der Terminatorteil des Iniferters;

n ganzzahlig und mindestens 2;

B ein elastischer Acrylpolymerblock mit einer Glasübergangstemperatur von weniger als 0 °C, wobei der elastische Acrylpolymerblock 1 bis 40 Gewichtsteile des Gesamtgewichts des des Acrylblocks mindestens ein polaren Comonomer aufweist, welches mit dem Monomer des Acrylpolymerblock copolymerisiert werden kann;

und

A ein normalerweise thermoplastischer Polymerblock mit einer Glasübergangstemperatur von mindestens 30 °C,

worin der A-Block aus einem Monomer gebildet wird, ausgewählt aus der Gruppe, bestehend aus Methylmethacrylat, Polystyrylethylmethacrylat-Makromer, Methylmethacrylat-Makromer, Acrylsäure, Acrylnitril, Isobornylmethacrylat, N-Vinylpyrrolidon und deren Mischungen,

das Gewichtsverhältnis des B-Blocks zum A-Block in dem genannten Blockcopolymer 95:5 bis 50:50 beträgt; und

(b) 0 bis 150 Gewichtsteile Klebrigmacher pro 100 Teile Blockcopolymer unter der Voraussetzung, daß die Haftklebstoff-Zusammensetzungen, in denen der elastische Acrylpolymerblock weniger als 5 Gewichtsteile des Gesamtgewichts des Acrylblocks polaren Copolymers umfaßt, ausgenomen sind.

2. Haftklebstoff-Zusammensetzung nach Anspruch 1, ferner dadurch gekennzeichnet, daß der elastische Acrylpolymerblock von einem Monomer gebildet wird, umfassend 75 % bis 99 Gewichtprozent von mindestens einem monomeren Acryl- oder Methacrylsäureester eines nichttertiären Alkohols, wobei der Alkohol 1 bis 14 Kohlenstoffatome mit einer mittleren Zahl von 4 bis 12 Kohlenstoffatomen hat, sowie 0 bis 25 Gewichtsteile von mindestens einem polaren Monomer, das mit dem monomeren Aryl- oder Methacrylsäureester copolymerisierbar ist.

3. Haftklebstoff -Zusammensetzung nach Anspruch 2, ferner gekennzeichnet durch die Wahl solcher monomerer Acryl- oder Methacrylsäureester aus Isooctylacrylat, 2-Ethylhexylacrylat, 2-Methylbutylacrylat und Butylacrylat, sowie die Wahl des polaren Monomers aus Acrylsäure, Methacrylsäure, Itaconsäure, Acrylamid, Methacrylamid, Acrylnitril, Methacrylnitril, N-Vinylpyrrolidon und Polyethylenoxidacrylat.

**4.** Haftklebstoff-Zusammensetzung nach einem der vorgenannten Ansprüche, ferner dadurch gekennzeichnet, daß das Blockcopolymer dargestellt wird durch die Formel:

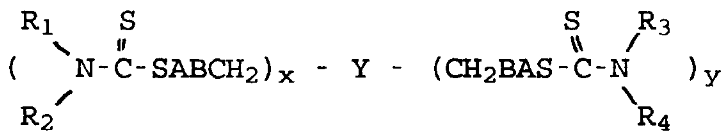

worin sind:

$R_1$, $R_2$, $R_3$ und $R_4$ aliphatische oder aromatische Teile, die gleich oder verschieden sein können und die die Fähigkeit von I zur Förderung der Radikalpolymerisation oder die Fähigkeit von T zur Rekombination mit I oder einem radikalischen Polymersegment, einschließlich I, nicht verhindern;

Y eine verbindende Gruppe mit einer Funktionalität von x + y, die im wesentlichen die Fähigkeit des I zur Förderung der Radikalpolymerisation oder die Fähigkeit von T zur Rekombination mit I oder einem radikalischen Polymersegment, einschließlich I, nicht verhindert; und

x und y jeweils ganze Zahlen von mindestens 1, wobei die Summe von x + y nicht größer ist als 12.

**5.** Haftklebstoff-Zusammensetzung nach einem der vorgenannten Ansprüche, ferner gekennzeichnet durch die Wahl des Iniferters aus der Gruppe, bestehend aus Xylylen-bis(N,N-diethyldithiocarbamat) und Xylylen-bis(N-carbazolyldithiocarbamat).

**6.** Adhäsiv beschichtetes Folienmaterial, ferner umfassend einen Träger, der mindestens teilweise auf mindestens einer der größeren Oberflächen mit der Haftklebstoff-Zusammensetzung nach einem der vorgenannten Ansprüche beschichtet ist.

**7.** Adhäsiv beschichtete Folie nach Anspruch 6, ferner gekennzeichnet durch ihre Fähigkeit zum Transport von Feuchtigkeit durch sie hindurch.

**8.** Adhäsiv beschichtetes Folienmaterial nach Anspruch 6 oder 7, ferner dadurch gekennzeichnet, daß es ein MVT von mindestens 1.000 $g/m^2$ pro 24 Stunden hat.

**9.** Adhäsiv beschichtetes Folienmaterial nach Anspruch 6 bis 8, ferner dadurch gekennzeichnet, daß es eine $T_o$ von mindestens 0,50 N/100 mm und eine $T_{48}$ von mindestens 0,40 N/100 mm hat.

**10.** Verfahren, zur Herstellung der Haftklebstoff-Zusammensetzung nach einem der vorgenannten Ansprüche, umfassend:

(a) Mischen von (1) eines Iniferters, der durch die allgemeine Formel $I(T)_n$ dargestellt wird und der bei Exponieren an einer geeigneten Energiequelle Radikale $I(\bullet)_n$ und nT• bilden kann, wobei n eine ganze Zahl von mindestens 2 ist, I• ein hochreaktionsfähiges Radikal, welches eine Radikalpolymerisation starten kann, und T• ein weniger reaktionsfähiges Radikal, welches im allgemeinen sehr viel weniger in der Lage ist, eine Radikalpolymerisation zu starten als I•, sich jedoch bei Abschalten der genannten Energiequelle mit $I(\bullet)_n$ oder einem radikalischem Polymersegment, das mit $I(\bullet)_n$ eine Radikalpolymerisation eingegangen ist, wiedervereinigen kann und (2) Mischen von einer ersten Monomercharge, umfassend Acrylmonomer und polares Comonomer, die in Gegenwart von $I(\bullet)_n$ eine Radikalpolymerisation eingehen können, um einen Acrylcopolymerblock mit einer Glasübergangstemperatur von weniger als 0 °C zu bilden;

(b) Exponieren der Mischung von (a) an einer Energiequelle, die in der Lage ist, Radikale $I(\bullet)_n$ und nT• zu bilden;

(c) Beibehalten der Exponierung von (b), bis die erste Monomercharge mit $I(\bullet)_n$ polymerisiert, um ein radikalisches Polymersegment zu bilden, welches durch die Formel $I(B\bullet)_n$ repräsentiert wird und worin B einen, aus der ersten Monomercharge gebildeten elastischen Acrylcopolymerblock mit einer Glasübergangstemperatur von weniger als 0 °C darstellt;

(d) Beenden der Exponierung, wodurch eine Vereinigung von $I(B\bullet)_n$ und nT• bewirkt wird, um ein Polymer zu bilden, welches durch die Formel $I(BT)_n$ repräsentiert wird;

(e) Mischen von $I(BT)_n$ mit einer zweiten Monomercharge, umfassend ein Monomer, das in Anwesenheit von $I(B\bullet)_n$ zu einem thermoplastisch verstärkenden Polymerblock mit einer Glasübergangstemperatur von mindestens 30 °C eine Radikalpolymerisation eingehen kann;

(f) Exponieren von $I(BT)_n$ an einer Energiequelle, die in der Lage ist, Radikale $I(\bullet)_n$ und $nT\bullet$ zu bilden;

(g) Beibehalten der Exponierung von (f), bis die zweite Monomercharge mit $I(B\bullet)_n$ polymerisiert, um ein radikalisches Blockcopolymersegnent zu bilden, welches durch die Formel $I(BA\bullet)_n$ repräsentiert wird und worin A einen aus der zweiten Monomercharge gebildeten, normalerweise thermoplastischen Polymerblock mit einer Glasübergangstemperatur von mindestens 30 °C darstellt, worin der A-Block gebildet wird aus dem zweiten Monomer, ausgewählt aus Methylmethacrylat, Polystyrylethylmethacrylat-Makromer; Methylmethacrylat-Makromer, Acrylsäure, Acrylnitril, Isobornylmethacrylat, N-Vinylpyrrolidon und deren Mischungen;

(h) Beenden der Exponierung von (f), wodurch eine Vereinigung von $I(BA\bullet)_n$ und $nT\bullet$ bewirkt wird, um ein Blockcopolymer zu bilden, welches durch die Formel $I(BAT)_n$ repräsentiert wird; und

(i) Compoundieren eines kompatiblen Klebrigmachers mit dem Blockpolymer im Anteil von 0 bis 150 Gewichtsteilen Klebrigmachers pro 100 Gewichtsteile des Copolymers.

**Revendications**
**Revendications pour les Etats contractants suivants : BE, CH, ES, LI, SE**

**1.** Composition adhésive sensible à la pression, caractérisée en ce qu'elle comprend :

(a) un copolymère bloc représenté par la formule générale $I(BAT)_n$
dans laquelle :

- I représente la partie initiateur à radicaux libres d'un iniferter de la formule $I(T)_n$;
- T représente la partie terminale de l'iniferter;
- n est un nombre entier d'au moins 2;
- B représente un bloc de polymère acrylique élastique ayant une température de transition vitreuse de moins de 0 °C; et
- A représente un bloc de polymère normalement thermoplastique ayant une température de transition vitreuse d'au moins 30 °C,

dans laquelle le bloc A susdit est formé d'un monomère choisi dans le groupe comprenant le méthacrylate de méthyle, le macromère de méthacrylate de polystyryléthyle, le macromère de méthacrylate de méthyle, l'acide acrylique, l'acrylonitrile, le méthacrylate d'isobornyle, la N-vinyl pyrrolidone et leurs mélanges,
le rapport en poids du bloc B au bloc A dans le copolymère bloc étant de 95/5 à 50/50; et
(b) 0 à 150 parties en poids de colle pour 100 parties de copolymère bloc.

**2.** Composition adhésive sensible à la pression suivant la revendication 1, caractérisée de plus par le fait que le bloc de polymère acrylique élastique est formé d'un monomère comprenant de 75 à 100 % en poids d'au moins un ester d'acide acrylique ou méthacrylique monomère d'un alcool non tertiaire, ledit alcool comportant de 1 à 14 atomes de carbone, le nombre moyen d'atomes de carbone étant d'environ 4 à 12, et de 0 à 25 parties en poids d'au moins un monomère polaire copolymérisable avec l'ester d'acide acrylique ou méthacrylique monomère susdit.

**3.** Composition adhésive sensible à la pression suivant la revendication 2, caractérisée de plus en ce que l'ester d'acide acrylique ou méthacrylique monomère est choisi parmi l'acrylate d'isooctyle, l'acrylate de 2-éthylhexyle, l'acrylate de 2-méthylbutyle et l'acrylate de butyle et le monomère polaire est choisi parmi l'acide acrylique, l'acide méthacrylique, l'acide itaconique, l'acrylamide, le méthacrylamide, l'acrylonitrile, le méthacrylonitrile, la N-vinyl pyrrolidone et l'acrylate d'oxyde de polyéthylène.

**4.** Composition adhésive sensible à la pression suivant l'une quelconque des revendications précédentes, caractérisée de plus en ce que le copolymère bloc est représenté par la formule :

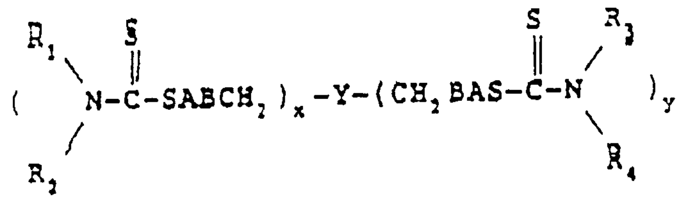

dans laquelle :

| | |
|---|---|
| $R_1$, $R_2$, $R_3$ et $R_4$ | sont des fragments aliphatiques ou aromatiques qui peuvent être identiques ou différents et qui n'empêchent pas la possibilité de I de favoriser une polymérisation radicalaire ou avec T de se combiner avec I ou un segment à radicaux libres de polymère comprenant I; |
| Y | est un groupe de liaison ayant une fonctionnalité de x + y qui n'entrave pratiquement pas la possibilité de I de favoriser la polymérisation radicalaire ou la possibilité de T de se recombiner avec I ou un segment à radicaux libres de polymère comprenant I; et |
| x et y | sont chacun des nombres entiers d'au moins 1 et la somme de x + y ne dépasse pas 12. |

**5.** Composition adhésive sensible à la pression suivant l'une quelconque des revendications précédentes, caractérisée de plus en ce que l'iniferter est choisi dans le groupe comprenant le xylylène bis (N,N-diéthyl dithiocarbamate) et le xylylène bis (N-carbazolyl dithiocarbamate).

**6.** Matière en feuille revêtue d'adhésif, caractérisée de plus en ce qu'elle comprend un support au moins partiellement revêtu sur au moins une surface importante de la composition adhésive sensible à la pression suivant l'une quelconque des revendications précédentes.

**7.** Matière en feuille revêtue d'adhésif suivant la revendication 6, caractérisée de plus par sa capacité à transporter l'humidité au travers d'elle.

**8.** Matière en feuille revêtue d'adhésif suivant l'une ou l'autre des revendications 6 et 7, caractérisée de plus en ce qu'elle a un MTV d'au moins 1000 g par mètre carré par 24 heures.

**9.** Matière en feuille revêtue d'adhésif suivant l'une quelconque des revendications 6 à 8, caractérisée de plus en ce qu'elle a un $T_0$ d'au moins 0,50 N/100 et un $T_{48}$ d'au moins 0,40 N/100 mm.

**10.** Procédé de fabrication de la composition adhésive sensible à la pression suivant l'une quelconque des revendications précédentes, caractérisé en ce qu'il comprend :

(a) le mélange (1) d'un iniferter représenté par la formule générale $I(T)_n$ pouvant être soumis à une source d'énergie appropriée de formation de radicaux libres $I(\bullet)_n$ et $nT\bullet$ où n est un nombre entier d'au moins 2, $I\bullet$ est un radical libre fortement réactif pouvant initier une polymérisation radicalaire et $T\bullet$ est un radical libre moins réactif qui est d'une manière générale beaucoup moins apte à initier une polymérisation radicalaire que $I\bullet$ mais qui se réunira à $I(\bullet)_n$ ou un segment de polymère à radicaux libres polymérisé radicalairement avec $I(\bullet)_n$ lors de l'arrêt de ladite source d'énergie et (2) d'une première charge de monomère comprenant un monomère acrylique qui est polymérisable radicalairement en présence de $I(\bullet)_n$ pour former un bloc de polymère acrylique ayant une température de transition vitreuse de moins de 0 ° C;

(b) l'exposition du mélange de (a) à une source d'énergie pouvant former des radicaux libres $I(\bullet)_n$ et $nT\bullet$;

(c) le maintien de l'exposition de (b) jusqu'à ce que la première charge de monomère polymérise avec $I(\bullet)_n$ pour former un segment de polymère à radicaux libres représenté par la formule $I(B\bullet)_n$, dans laquelle B représente un bloc de polymère acrylique élastique ayant une température de transition vitreuse de moins de 0 ° C formé de la première charge de monomère susdite;

(d) l'arrêt de l'exposition de manière à ce que $I(B\bullet)_n$ et $nT\bullet$ se combinent pour former un polymère représenté par la formule $I(BT)_n$;

(e) le mélange de $I(BT)_n$ avec une seconde charge de monomère comprenant un monomère qui est polymérisable radicalairement en présence de $I(B\bullet)_n$ à un bloc thermoplastique ayant une température de transition vitreuse d'au moins 30 °C;

(f) l'exposition de $I(BT)_n$ à une source d'énergie pouvant former des radicaux libres $I(B\bullet)_n$ et $nT\bullet$;

(g) le maintien de l'exposition de (f) jusqu'à ce que la seconde charge de monomère polymérise avec $I(B\bullet)_n$ pour former un segment de copolymère bloc à radicaux libres représenté par la formule $I(BA\bullet)_n$, dans laquelle A représente un bloc de polymère normalement thermoplastique ayant une température de transition vitreuse d'au moins 30 °C formé de la seconde charge de monomère, le bloc A étant formé du second monomère choisi dans le groupe comprenant le méthacrylate de méthyle, le macromère de méthacrylate de polystyryléthyle, le macromère de méthacrylate de méthyle, l'acide acrylique, l'acrylonitrile, le méthacrylate d'isobornyle, la N-vinyl pyrrolidone et leurs mélanges;

(h) l'arrêt de l'exposition de (f) de telle sorte que $I(BA\bullet)_n$ et $nT\bullet$ se combinent pour former un copolymère bloc représenté par la formule $I(BAT)_n$; et

(i) le mélange d'une colle compatible avec le copolymère bloc au rapport de 0 à 150 parties en poids de colle pour 100 parties en poids du copolymère.

**Revendications pour les Etats contractants suivants : DE, FR, GB, IT, NL**

**1.** Composition adhésive sensible à la pression, caractérisée en ce qu'elle comprend :

(a) un copolymère bloc représenté par la formule générale $I(BAT)_n$

dans laquelle :

- I représente la partie initiateur à radicaux libres d'un iniferter de la formule $I(T)_n$;
- T représente la partie terminale de l'iniferter;
- n est un nombre entier d'au moins 2;
- B représente un bloc de polymère acrylique élastique ayant une température de transition vitreuse de moins de 0 °C, ledit bloc de polymère acrylique élastique comprenant de 1 à 40 parties en poids du poids total de ce bloc acrylique d'au moins un comonomère polaire copolymérisable avec le monomère du bloc de polymère acrylique susdit, et
- A représente un bloc de polymère normalement thermoplastique ayant une température de transition vitreuse d'au moins 30 °C,

dans laquelle le bloc A susdit est formé d'un monomère choisi dans le groupe comprenant le méthacrylate de méthyle, le macromère de méthacrylate de polystyryléthyle, le macromère de méthacrylate de méthyle, l'acide acrylique, l'acrylonitrile, le méthacrylate d'isobornyle, la N-vinyl pyrrolidone et leurs mélanges,

le rapport en poids du bloc B au bloc A dans le copolymère bloc étant de 95/5 à 50/50; et

(b) 0 à 150 parties en poids de colle pour 100 parties de copolymère bloc, pour autant que lesdites compositions adhésives sensibles à la pression dans lesquelles le bloc de polymère acrylique élastique constitue moins de 5 parties en poids du poids total du bloc acrylique du copolymère polaire soient exclues de la revendication.

**2.** Composition adhésive sensible à la pression suivant la revendication 1, caractérisée de plus par le fait que le bloc de polymère acrylique élastique est formé d'un monomère comprenant de 75 à 99 % en poids d'au moins un ester d'acide acrylique ou méthacrylique monomère d'un alcool non tertiaire, ledit alcool comportant de 1 à 14 atomes de carbone, le nombre moyen d'atomes de carbone étant d'environ 4 à 12, et de 1 à 25 parties en poids d'au moins un monomère polaire copolymérisable avec l'ester d'acide acrylique ou méthacrylique monomère susdit.

**3.** Composition adhésive sensible à la pression suivant la revendication 2, caractérisée de plus en ce que l'ester d'acide acrylique ou méthacrylique monomère est choisi parmi l'acrylate d'isooctyle, l'acrylate de 2-éthylhexyle, l'acrylate de 2-méthylbutyle et l'acrylate de butyle et le monomère polaire est choisi parmi l'acide acrylique, l'acide méthacrylique, l'acide itaconique, l'acrylamide, le méthacrylamide, l'acrylonitrile, le méthacrylonitrile, la N-vinyl pyrrolidone et l'acrylate d'oxyde de polyéthylène.

**4.** Composition adhésive sensible à la pression suivant l'une quelconque des revendications précédentes, caractérisée de plus en ce que le copolymère bloc est représenté par la formule :

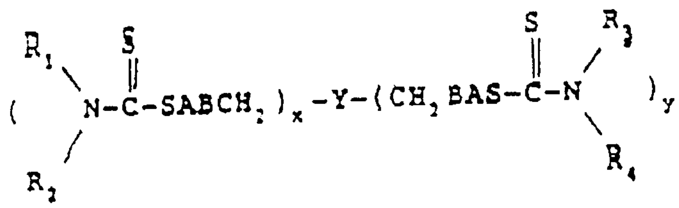

dans laquelle :

| | |
|---|---|
| $R_1$, $R_2$, $R_3$ et $R_4$ | sont des fragments aliphatiques ou aromatiques qui peuvent être identiques ou différents et qui n'empêchent pas la possibilité de I de favoriser une polymérisation radicalaire ou avec T de se combiner avec I ou un segment à radicaux libres de polymère comprenant I; |
| Y | est un groupe de liaison ayant une fonctionnalité de x + y qui n'entrave pratiquement pas la possibilité de I de favoriser la polymérisation radicalaire ou la possibilité de T de se recombiner avec I ou un segment à radicaux libres de polymère comprenant I; et |
| x et y | sont chacun des nombres entiers d'au moins 1 et la somme de x + y ne dépasse pas 12. |

**5.** Composition adhésive sensible à la pression suivant l'une quelconque des revendications précédentes, caractérisée de plus en ce que l'iniferter est choisi dans le groupe comprenant le xylylène bis (N,N-diéthyl dithiocarbamate) et le xylylène bis (N-carbazolyl dithiocarbamate).

**6.** Matière en feuille revêtue d'adhésif, caractérisée de plus en ce qu'elle comprend un support au moins partiellement revêtu sur au moins une surface importante de la composition adhésive sensible à la pression suivant l'une quelconque des revendications précédentes.

**7.** Matière en feuille revêtue d'adhésif suivant la revendication 6, caractérisée de plus par sa capacité à transporter l'humidité au travers d'elle.

**8.** Matière en feuille revêtue d'adhésif suivant l'une ou l'autre des revendications 6 et 7, caractérisée de plus en ce qu'elle a un MTV d'au moins 1000 g par mètre carré par 24 heures.

**9.** Matière en feuille revêtue d'adhésif suivant l'une quelconque des revendications 6 à 8, caractérisée de plus en ce qu'elle a un $T_0$ d'au moins 0,50 N/100 et un $T_{48}$ d'au moins 0,40 N/100 mm.

**10.** Procédé de fabrication de la composition adhésive sensible à la pression suivant l'une quelconque des revendications précédentes, caractérisé en ce qu'il comprend :

(a) le mélange (1) d'un iniferter représenté par la formule générale $I(T)_n$ pouvant être soumis à une source d'énergie appropriée de formation de radicaux libres $I(\bullet)_n$ et $nT\bullet$ où n est un nombre entier d'au moins 2, $I\bullet$ est un radical libre fortement réactif pouvant initier une polymérisation radicalaire et $T\bullet$ est un radical libre moins réactif qui est d'une manière générale moins apte à initier une polymérisation radicalaire que $I\bullet$ mais qui se réunira avec $I(\bullet)_n$ ou un segment de polymère à radicaux libres polymérisé radicalairement avec $I(\bullet)_n$ lors de l'arrêt de la source d'énergie susdite et (2) d'une première charge de monomère comprenant un monomère acrylique et un comonomère polaire, lesquels monomères sont polymérisables radicalairement en présence de $I(\bullet)_n$ pour former un bloc de copolymère acrylique ayant une température de transition vitreuse de moins de 0 °C;

(b) l'exposition du mélange de (a) à une source d'énergie pouvant former des radicaux libres $I(\bullet)_n$ et $nT\bullet$;

(c) le maintien de l'exposition de (b) jusqu'à ce que la première charge de monomère polymérise avec $I(\bullet)_n$ pour former un segment de polymère à radicaux libres représenté par la formule $I(B\bullet)_n$, dans laquelle B représente un bloc de polymère acrylique élastique ayant une température de transition vitreuse de moins de 0 °C formé de la première charge de monomère susdite;

(d) l'arrêt de l'exposition de manière à ce que $I(B\bullet)_n$ et $nT\bullet$ se combinent pour former un polymère représenté par la formule $I(BT)_n$;

(e) le mélange de $I(BT)_n$ avec une seconde charge de monomère comprenant un monomère qui est polymérisable radicalairement en présence de $I(B\bullet)_n$ à un bloc thermoplastique ayant une température de transition vitreuse d'au moins 30 ° C;
(f) l'exposition de $I(BT)_n$ à une source d'énergie pouvant former des radicaux libres $I(B\bullet)_n$ et $nT\bullet$;
(g) le maintien de l'exposition de (f) jusqu'à ce que la seconde charge de monomère polymérise avec $I(B\bullet)_n$ pour former un segment de copolymère bloc à radicaux libres représenté par la formule $I(BA\bullet)_n$, dans laquelle A représente un bloc de polymère normalement thermoplastique ayant une température de transition vitreuse d'au moins 30 ° C formé de la seconde charge de monomère, le bloc A étant formé du second monomère choisi dans le groupe comprenant le méthacrylate de méthyle, le macromère de méthacrylate de polystyryléthyle, le macromère de méthacrylate de méthyle, l'acide acrylique, l'acrylonitrile, le méthacrylate d'isobornyle, la N-vinyl pyrrolidone et leurs mélanges;
(h) l'arrêt de l'exposition de (f) de telle sorte que $I(BA\bullet)_n$ et $nT\bullet$ se combinent pour former un copolymère bloc représenté par la formule $I(BAT)_n$; et
(i) le mélange d'une colle compatible avec le copolymère bloc au rapport de 0 à 150 parties en poids de colle pour 100 parties en poids du copolymère.